(19) **Europäisches Patentamt**
**European Patent Office**
**Office européen des brevets**

(11) **EP 4 006 900 B1**

(12) **EUROPEAN PATENT SPECIFICATION**

(45) Date of publication and mention
of the grant of the patent:
**24.12.2025  Bulletin 2025/52**

(51) International Patent Classification (IPC):
**G10L 15/22** *(2006.01)*     **G10L 25/63** *(2013.01)*

(52) Cooperative Patent Classification (CPC):
**G10L 15/22;** G10L 25/63

(21) Application number: **21209880.0**

(22) Date of filing: **23.11.2021**

(54) **SYSTEM WITH SPEAKER REPRESENTATION, ELECTRONIC DEVICE AND RELATED METHODS**

SYSTEM MIT DARSTELLUNG VON SPRECHERN, ELEKTRONISCHE VORRICHTUNG UND ENTSPRECHENDE VERFAHREN

SYSTÈME DOTÉ D'UNE REPRÉSENTATION DE HAUT-PARLEUR, DISPOSITIF ÉLECTRONIQUE ET PROCÉDÉS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **27.11.2020  DK PA202070795**

(43) Date of publication of application:
**01.06.2022  Bulletin 2022/22**

(73) Proprietor: **GN Hearing A/S**
**2750 Ballerup (DK)**

(72) Inventors:
• **HVELPLUND, Anders**
**2750 Ballerup (DK)**

• **LILLELUND, Christian**
**2750 Ballerup (DK)**
• **ÖZKIL, Ali**
**2750 Ballerup (DK)**
• **EYBEN, Florian**
**2750 Ballerup (DK)**

(74) Representative: **GN Store Nord A/S**
**Lautrupbjerg 7**
**2750 Ballerup (DK)**

(56) References cited:
**US-A1- 2010 083 320     US-A1- 2012 130 717**
**US-A1- 2018 144 761**

**Description**

The present disclosure relates to speech processing and related tools and methods, and systems in particular for analysing, monitoring and/or evaluating speech of one or more speakers, for example a caller and/or an agent of a call and/or one or more participants of a telephone conversation or a meeting, such as an online meeting. Thus, a system, an electronic device, and related methods, in particular a method of operating a system comprising an electronic device is provided.

BACKGROUND

Today the interaction between people is increasingly taking place at a distance and virtually, e.g. via telephone calls, conference calls, and the like. However, it may be difficult for people speaking to each other on each side of a telephone call, to grasp emotions or sentiments of the other party by just listening to a speech.
For example, almost all support and after sales is performed over the phone between call center agents initiating and/or answering the calls and potential customers being contacted or customers contacting call center agents with various issues. Call center agents working at call centers, support center, or contact centers struggle with a job that can at time be monotonous and repetitive. This represents a negative experience for the agents, but it also leads to a worse tone performance, and in turn a lower customer satisfaction for the customers on the other end of the line and on average, longer calls. After taking calls for many hours, it can be difficult to remember that there is a human being on the other side of the call, who are longing for help to solve a problem.
US 2018/144761 A1 relates to systems and methods for automatically generating at least one of facial expressions, body gestures, vocal expressions, or verbal expressions for a virtual agent based on emotion, mood and/or personality of a user and/or the virtual agent. Further, US 2018/144761 A1 also relates to systems and method for determining a user's emotion, mood and/or personality.
US 2012/130717 A1 describes a method for detecting emotions in audio data and projecting the emotions on an avatar. The method also uses image information of the user for creating the avatar.

SUMMARY

Accordingly, there is a need for systems, electronic devices, and methods of operating systems with speaker representation having improved speech processing.
The invention is defined by the features of the independent claims.

BRIEF DESCRIPTION OF THE DRAWINGS

The above and other features and advantages of the present invention will become readily apparent to those skilled in the art by the following detailed description of exemplary embodiments thereof with reference to the attached drawings, in which:

Fig. 1 schematically illustrates an exemplary system comprising a server device and an electronic device according to the present disclosure,
Figs. 2A-B are flow diagrams of an exemplary method according to the present disclosure,
Fig. 3 schematically illustrate an exemplary electronic device according to the present disclosure,
Fig. 4 schematically illustrate a user interface of an electronic device according to the present disclosure,
Fig. 5 schematically illustrates an exemplary system comprising a server device and an electronic device according to the present disclosure, and
Fig. 6. schematically illustrates an exemplary data structure according to the present disclosure.

DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.
A method of operating a system comprising an electronic device is disclosed. The system may optionally comprise a server device comprising an interface, one or more processors, and a memory. The server device may be configured on a cloud, such as a cloud network. The server device may be located remotely from the remaining of the system, such as remotely from the electronic device. The system may be a system for monitoring, handling, and/or analysing one or more audio signals, e.g. including audio signal(s) of one or more speakers talking, e.g. as a monologue or a conversation, such as a meeting conversation, a video/telephone conference conversation, or a call, e.g. a telephone or VoIP call. The system may be a system for monitoring, handling, and/or analysing one or more audio signals, such as a conversation, e.g. between two or more people/speakers, such as a conversation in a phone call or a meeting. The system may for example comprise or act as a call center system for monitoring, handling, and/or analysing one or more audio signals, such as conversations between two or more people, e.g. a phone call between an agent of the call center system and a customer or caller. The system may be configured to use edge processing between one or more electronic devices. Different operations and/or steps of the method and/or the system may be performed at different devices, such as at the electronic device and/or at the server device.

The electronic device comprises an interface, a processor, and a memory. The electronic device may for example be or comprise a mobile phone, such as a smartphone, a computer, such as a laptop computer or PC, or a tablet computer. The electronic device may for example be a user device, such as a mobile phone or a computer, configured to perform a call between a user and one or more persons. The electronic device may be configured to obtain first audio input, such as first audio input from the call between the user and another person. For example, the electronic device may act as call agent device where the user may be an agent, such as an agent of a call center, such as a support call center, an after sales call center, a marketing call center, a reception call center, a sales call center, or companies where an important part of the employees' job is to have conversations with customers. The electronic device may for example be a user device, such as a mobile phone or a computer, configured to record first audio input from a first speaker, such as record the first speaker speaking or talking. The electronic device may be configured to obtain one or more audio signals, such as generate one or more audio signals, including a first audio signal. The first audio signal may be based on the first audio input.

The method comprises obtaining one or more audio signals, also denoted $AS\_i$, $i=1, 2, ...N$, where N is the number of speakers/audio signals, the one or more audio signals including a first audio signal, also denoted $AS\_1$. The first audio signal may be representative of first speech/voice of a first speaker. The first speaker may be a caller, an agent, or a first participant in a telephone conversation or a meeting. The one or more audio signals optionally includes a second audio signal, also denoted $AS\_2$. The second audio signal may be representative of second speech/voice of a second speaker. The second speaker may be a caller, an agent, or a second participant in a telephone conversation or a meeting.

Obtaining one or more audio signals may comprise obtaining one or more audio inputs, such as a first audio input. In other words, the first audio signal may be based on the first audio input. The first audio signal may be obtained from a call or conversation between the user and another person, e.g. a first call or a first conversation. The first speaker may be the person speaking/talking the most during the first call and/or the first conversation. The first speaker may be the first person speaking during the first call and/or first conversation. The first speaker may be a person of interest that the user may want a representation of, such as the first speaker representation. The first audio signal may be obtained from the electronic device recording first audio input from a first speaker, such as recording the first speaker speaking or talking. Obtaining one or more audio signals may comprise generating one or more audio signals, including the first audio signal. The first audio signal may be based on the first audio input. The first audio signal may comprise a first speaker audio signal. The first audio signal may be an agent audio signal or a caller audio signal, and a second audio signal is the other.

The method comprises determining one or more first sentiment metrics, also denoted $SM\_1\_i$, $i=1, 2, ..., M$, where M is the number of first sentiment metrics.

A sentiment metric is indicative of a sentiment state of a speaker. A sentiment metric may comprise one or more of a sentiment type identifier, sentiment level(s), and a confidence score.

The one or more first sentiment metrics, such as $SM\_1\_1$ and/or $SM\_1\_2$, are indicative of a first speaker state, i.e. one or more first sentiment states of the first speaker, and may be based on the first audio signal and/or the second audio signal. The one or more first sentiment metrics $SM\_1\_i$ may comprise one or more parameters indicative of the first speaker state.

The one or more first sentiment metrics $SM\_1\_i$ include a first primary sentiment metric, also denoted $SM\_1\_1$, indicative of a primary sentiment state of a first speaker. In other words, $SM\_1\_1$ may be indicative of a primary emotion of the first speaker. $SM\_1\_1$ may be indicative of a dominating sentiment state and/or a first sentiment state in time of the first speaker. The primary sentiment state may be one of disappointed, bored, afraid, sad, negative, very negative, frustrated, annoyed, fearful, panicking, hesitant, dissatisfied, angry, surprised, worried, wondering, not understanding, thinking, neutral, positive, very positive, glad, friendly, confident, excited, pleased, satisfied, aroused, content, relaxed, energetic, enthusiastic, service-minded, helpful, interested, and happy. In one or more exemplary methods/systems, the primary sentiment state of the first speaker may be selected from a primary set of sentiment states.

A first sentiment metric $SM\_1\_i$ may comprise a first sentiment type identifier, also denoted $ST\_ID\_1\_i$, where i is an index, and $i=1, 2, ... H$, where H is the number of first sentiment type identifiers. In other words, determining one or more first sentiment metrics $SM\_1\_i$ may comprise determining a first sentiment type identifier $ST\_ID\_1\_i$, e.g. a first primary sentiment type identifier $ST\_ID\_1\_1$ of the first primary sentiment metric $SM\_1\_1$. A sentiment type identifier is indicative of a sentiment state of a speaker.

A sentiment type identifier may for example be a label, a number or value, such as an integer, corresponding to a specific sentiment (state), a sentiment type and/or a sentiment class. For example, $ST\_ID\_1\_i$ may respectively be selected from the same or different sets of sentiment type identifiers. For example, ST_ID_1_1 may be selected from a primary set of sentiment type identifiers and/or ST_ID_1_2 may be selected from a secondary set of sentiment type identifiers. The primary set of sentiment type identifiers may be different from or the same as the secondary set of sentiment type identifiers. The primary set of sentiment type identifiers and the secondary set of sentiment type identifiers may share one or more, such as a plurality of, sentiment type identifiers.

In one or more exemplary methods, the first primary sentiment metric SM_1_1 comprises a first primary sentiment type identifier ST_ID_1_1 selected from a primary set of sentiment type identifiers ST_ID_SET_1, where ST_ID_SET_1 comprises a plurality of sentiment type identifiers, e.g. including at least three, four, five or more sentiment type identifiers.

In one or more exemplary methods, the primary set of sentiment type identifiers ST_ID_SET_1 is given by:

$$ST\_ID\_SET\_1 = \{1, 2, 3, 4, 5\},$$

where "1" is indicative of a sentiment, such as "Very negative", "2" is indicative of a sentiment, such as "Negative", "3" is indicative of a sentiment, such as "Neutral", optional "4" is indicative of a sentiment, such as "Positive", and optional "5" is indicative of a sentiment, such as "Very positive".

In one or more exemplary methods, the primary set of sentiment type identifiers ST_ID_SET_1 is given by:

$$ST\_ID\_SET\_1 = \{1, 2, 3, 4, 5\},$$

where "1" is indicative of a sentiment, such as "Angry", "2" is indicative of a sentiment, such as "Low Energy", "3" is indicative of a sentiment, such as "OK Energy", optional "4" is indicative of a sentiment, such as "Friendly, engaged, energetic", and optional "5" is indicative of a sentiment, such as "Highly engaged".

In one or more exemplary methods, the primary set of sentiment type identifiers ST_ID_SET_1 is given by:
ST_ID_SET_1 = {"Very negative", "Negative", "Neutral", "Positive", "Very positive"}, e.g. where "Very negative" and/or "Very positive" is optional.

A set of sentiment type identifiers, such as the primary set of sentiment type identifiers and/or the secondary set of sentiment type identifiers, may comprise at least three or at least four different sentiment type identifiers, such as five, six, seven, eight, nine, or more sentiment type identifiers. In other words, each sentiment or sentiment type may have a corresponding ST_ID_1_i. For example, the first primary sentiment metric SM_1_1 may comprise a first primary sentiment type identifier ST_ID_1_1 indicative of or corresponding to the primary sentiment state or the first speaker state being "positive".

A first sentiment metric SM_1_i may comprise a sentiment level, also denoted SL_1_i, i=1, 2, ..., O, where O is the number of sentiment levels. In other words, determining SM_1_i may comprise determining SL_1_i, e.g. determining SM_1_1 may comprise determining a first primary sentiment level SL_1_1. A sentiment level SL_1_i may indicate a level of the i'th sentiment type. In other words, SL_1_i may indicate a degree of the i'th sentiment type. For example, when ST_ID_1_1 corresponds to the first speaker state "positive", a first primary sentiment level SL_1_1 may be indicative of or correspond to a degree of the sentiment "positive", e.g. at a scale, e.g. from 0 to 1 or from 1 to 10, or selected from "low", "medium", and "high". In other words, a sentiment level of a sentiment metric may be on a scale, e.g. from 0 to 1 or from 1 to 10.

A first sentiment metric SM_1_i may comprise a confidence score, respectively denoted SCS_1_i, i=1, 2, ..., P, where P is the number of confidence scores. In other words, determining SM_1_i may comprise determining a first confidence score SCS_1_i, e.g. determining first primary sentiment metric SM_1_1 may comprise determining a first primary confidence score SCS_1_1. A confidence score of a sentiment metric may be indicative of a score or a probability of the determined sentiment metric, e.g. sentiment type identifier and/or sentiment level, being correct, e.g. the sentiment state or sentiment type (as identified by the sentiment type identifier of the sentiment metric) being correct. For example, SCS_1_1 = 0.88 may be indicative of a probability of 88% that the determined ST_ID_1_1, e.g. being "positive", is correct.

Determining one or more first sentiment metrics indicative of a first speaker state may comprise extracting one or more speaker features from the first audio signal, e.g. wherein the one or more first sentiment metrics are based on the one or more speaker features.

The one or more speaker features may comprise paralinguistic features. The one or more speaker features may for example comprise a speaker tone feature, a speaker intonation feature, a speaker power or volume feature, a speaker pitch feature, a speaker voice quality feature, a speaker rate feature, a linguistic feature, an acoustic feature, and/or a speaker spectral band energy feature. A spectral band energy feature may comprise individual bins of spectrograms indicating a signal energy level at a given frequency.

A linguistic feature may comprise specific sentiment related words such as positive and/or negative words. The linguistic feature may be determined based on a text transcript of the audio signal. The text transcript may be obtained by human annotators or using an automatic speech recognition (speech to text) algorithm or service. The linguistic feature may comprise an embedding feature by a deep neural network (e.g. a BERT transformer network or other sequence-to-sequence autoencoders).

In one or more exemplary methods, the one or more first sentiment metrics may be determined based on a machine learning, ML, model, such as an output of a ML model. The inputs to the ML model may be speaker features or the audio signal itself. A ML model may comprise a Linear Regression Model, a Support-Vector-Machine, a Decision Tree Classifier (e.g. Random Forest, XGBoost), a Gaussian Mixture Model, a Hidden Markov Model, and/or a Neural Network. A Neural Network may for example comprise one or more of a linear feed forward layer, a convolutional layer, a recurrent layer, and an attention layer. A ML model may comprise a weighting of one or more speaker features. For example, the ML model may map e.g. a speaker intonation and/or a voice quality to a sentiment metric/type, a sentiment level, and/or a sentiment confidence score. A ML model may comprise parameters in the range of 100000 parameters to 1000000 parameters, e.g. 500000 to 1000000 parameters. A ML model may comprise layers in the range of 5 layers to 20 layers, e.g. 10 layers to 15 layers.

Example of known ML models may be: "'www.researchgate.net/publication/222431231_Emotional_speech_recognition_Resource s_features_and_methods", "https://mediatum.ub.tum.de/doc/1523509/1523509.pdf", and "https://www.researchgate.net/publication/319565810_End-to-end_learning_for_dimensional_emotion_recognition_from_physiological_signals".

For example, a sentiment metric may be derived from a speaker intonation metric, also denoted S, which may be a sum of the normalised variance of fundamental frequency F0/pitch (such as range adapted from 0 to 1 by multiplication with a factor determined on the audio input, such as training audio input, as the inverse of the range of F0 variance of the training data of the ML model). For example, a sentiment metric may be derived from a speaker intonation metric S, which may be the normalised (to range 0-1) variance of the signal intensity. To determine the sentiment "aroused" and the sentiment "non-aroused", for example, a threshold of e.g. 1.0 can be applied to S, where aroused is detected when S above or equals to 1.0 and non-aroused is detected for S below 1.0. Further, a sentiment level may be determined or obtained for the sentiment "aroused" or "non-aroused", e.g. in the range 0-1, where S may be divided by two (e.g. the number of speaker features that are part of the sum). Further, a sentiment confidence score may be determined or obtained based on the absolute value of the numeric difference of the normalised F0 variance and/or the normalised signal intensity variance.

A ML model may be trained based on e.g. recording of calls, where a validator or supervisor, such as a psychologist and/or human supervisor, have assigned sentiment identifiers/labels for a sentiment metric, e.g. based on their own subjective best effort judgement, and/or speaker feature labels for a speaker feature. A speaker feature may be determined algorithmically via signal processing algorithms and/or as an output of another ML model. The one or more first sentiment metrics may be inferred by the ML model. An input to the ML model may comprise one or more of an acoustic features, such as a loudness and/or pitch feature. A tone feature may be determined with a ML model, and may for example be a negative tone or a positive tone. Further an input to the ML model may comprise a spectrogram, a latent (hidden layer activations) representation of a (deep) neural network. An input to the ML model may comprise a static feature vector ("fingerprint"), such as a mean, a variance, a slope, peak distances, modulation spectra. An input to the ML model may comprise frame-wise (low-level) acoustic features such as a pitch of the voice, an energy level, spectral parameters (mel-frequency cepstrum, MFCC; e.g. logMelSpec), spectral statistics (slope, roll-off-points), speech spectral envelope characteristics (e.g. formants, harmonics, ratios of harmonics and formants), and/or voice quality measures like harmonic to noise ratio, HNR, Jitter, and/or Shimmer.

The method comprises determining one or more first appearance metrics, also denoted $AM\_1\_i$, i=1, 2, Q, where Q is the number of first appearance metrics of or associated with the first speaker.

An appearance metric is indicative of an appearance of a speaker. An appearance metric may comprise one or more of an appearance identifier, appearance level(s), and a confidence score, and may be indicative of an appearance of the first speaker, e.g. based on the first audio signal and/ or a second audio signal. Determining one or more first appearance metrics may comprise retrieving first appearance metric(s) from a database, e.g. based on information related to the first speaker stored in the database. The one or more first appearance metrics $AM\_1\_i$ may comprise one or more parameters indicative of the appearance of the first speaker. The one or more first appearance metrics $AM\_1\_i$ include a first primary appearance metric, also denoted $AM\_1\_1$, indicative of a primary appearance of the first speaker and/or a first secondary appearance metric, also denoted $AM\_1\_2$, indicative of a secondary appearance of the first speaker.

In other words, $AM\_1\_1$ may be indicative of a primary physical appearance of the first speaker. $AM\_1\_1$ may be selected from a gender metric (e.g. woman/female, man/male, or no gender), a weight metric, a height metric, an age metric, a language metric, a language capability metric, a hearing capability metric, a dialect metric, a health metric (e.g. respiratory condition, speech deficiency, and/or speaking impairment), a personality metric (e.g. extrovert or introvert person), and an understanding capability metric (e.g. based on age metric, health metric, and/or gender metric). The understanding capability metric may for be relevant when an old person have difficulties hearing a conversation, or a foreigner who's not comfortable in the spoken language. The understanding capability metric may provide an indication to the user e.g. that he/she shall speak slower and more articulated.

A first appearance metric AM_1_i may comprise a first appearance identifier, also denoted A_ID_1_i, where i is an index of the i'th first appearance metric, i=1, 2, ... I, where I is the number of first appearance identifiers. A first appearance identifier may be indicative of one of a gender metric, a weight metric, a height metric, an age metric, a language metric, a language capability metric, a hearing capability metric, and an understanding capability metric. In other words, determining AM_1_i may comprise determining A_ID_1_i, including a first primary appearance identifier A_ID_1_1 of a first primary appearance metric AM_1_1 and/or a first secondary appearance identifier A_ID_1_2 of a first secondary appearance metric AM_1_2.

An appearance identifier may for example be a label, a number or a value, such as an integer, corresponding to a specific appearance metric, appearance type and/or an appearance class. For example, A_ID_1_i may be chosen from a set of appearance types, e.g. including one or more of gender, height, weight, height, age, language, language capability, hearing capability, and understanding capability. The appearance metric identifier may be a label or a number that is mapped to and/or indicative of the type of appearance metric.

In one or more exemplary methods, the first primary appearance metric AM_1_1 comprises a first primary appearance identifier A_ID_1_1 optionally selected from a primary set of appearance identifiers A_ID_SET_1, where A_ID_SET_1 comprises a plurality of appearance identifiers, e.g. including at least three, four, five or more appearance type identifiers. In one or more exemplary methods, the first primary appearance metric AM_1_1 is a gender metric, i.e. first primary metric identifier A_ID_1_1 is indicative of gender, e.g. A_ID_1_1 = "Gender" or A_ID_1_1 = 1 that can be mapped to gender via a table.

In one or more exemplary methods, the first secondary appearance metric AM_1_2 comprises a first secondary appearance identifier A_ID_1_2 optionally selected from a secondary set of appearance identifiers A_ID_SET_2, where A_ID_SET_2 comprises a plurality of appearance identifiers, e.g. including at least three, four, five or more appearance identifiers. In one or more exemplary methods, the first secondary appearance metric AM_1_2 is an age metric, i.e. first secondary metric identifier A_ID_1_2 is indicative of age, e.g. A_ID_1_2 = "Age" or A_ID_1_2 = 2 that can be mapped to age via a table.

A set of appearance identifiers may comprise two or at least three or at least four different appearance identifiers, such as five, six, seven, eight, nine, or more appearance identifiers. For example, the first primary appearance metric AM_1_1 may comprise a first primary appearance identifier A_ID_1_1 indicative of or corresponding to the primary appearance of the first speaker, e.g. one of gender, weight, height, age, language, language capability, hearing capability, and understanding capability. For example, a first secondary appearance identifier A_ID_1_2 may be indicative of or correspond to a first secondary appearance of the first speaker, e.g. one of gender, weight, height, age, language, language capability, hearing capability, and understanding capability. The first secondary appearance identifier is optionally different from the first primary appearance identifier.

A first appearance metric AM_1_i may comprise an appearance level, also denoted AL_1_i, i=1, 2, ..., R, where R is the number of appearance levels. In other words, determining AM_1_i may comprise determining AL_1_i, e.g. determining AM_1_1 may comprise determining a first primary appearance level AM_1_1. The first appearance level AL_1_i may indicate a level, value, range, or label of the appearance metric AM_1_i as indicated by the appearance identifier A_ID_1_i. In other words, a first appearance level AL_1_i may indicate a level, value, range, or label of the first appearance metric AM_1_i. For example, when A_ID_1_1 corresponds to the first primary appearance of the first speaker being "gender", a first primary appearance level AL_1_1 may be indicative of or correspond to "male", "female" or optionally "unisex". For example, when first secondary appearance identifier A_ID_1_2 corresponds to the first secondary appearance metric of the first speaker being "height", a first secondary appearance level AL_1_2 may be indicative of or correspond to "short", "medium" or "tall". For example, when first secondary appearance identifier A_ID_1_2 corresponds to the first secondary appearance of the first speaker being "height", a first secondary appearance level AL_1_2 may be indicative of or correspond to "less than 160 cm", "between 160 cm and 185 cm" or "taller than 185 cm".

For example, when a first appearance identifier, such as first tertiary appearance identifier A_ID_1_3, corresponds to a first appearance metric, such as first tertiary appearance metric AM_1_3, of the first speaker being "age", a first tertiary appearance level AL_1_3 may be indicative of or correspond to an age range such as "younger than 20 years", "20-40 years", "40-60 years", or "older than 60 years" or an age label, such as "young", "mid-aged" or "old".

A first appearance metric AM_1_i may comprise a confidence score, also denoted ACS_1_i, i=1, 2, ..., S, where S is the number of confidence scores. In other words, determining a first appearance metric AM_1_i may comprise determining a first appearance confidence score ACS_1_i, e.g. determining a first primary appearance metric AM_1_1 may comprise determining a first primary appearance confidence score ACS_1_1. A first appearance confidence score ACS_1_i of an appearance metric AM_1_i may be indicative a score or a probability of the determined first appearance metric AM_1_i, such as first appearance level AL_1_i, being correct, e.g. the appearance metric or appearance level being correct. For example, ACS_1_1 = 0.95 may be indicative of a probability of 95% that a determined AL_1_1 being "male" is correct.

Determining one or more first appearance metrics indicative of a first speaker may comprise extracting one or more speaker appearance features from the first audio signal. The one or more speaker appearance features may for example comprise a speaker tone feature, a speaker intonation feature, a speaker power feature, a speaker pitch feature, a speaker voice quality feature, a speaker rate feature, a linguistic feature, an acoustic feature, and/or a speaker spectral band energy feature.

A spectral band energy feature may comprise individual bins of spectrograms indicating a signal energy level at a given frequency.

A linguistic feature may comprise specific appearance related words such as positive and/or negative words. The linguistic feature may be determined based on a text transcript of the audio signal. The text transcript may be obtained by human annotators or using an automatic speech recognition (speech to text) algorithm or service. The linguistic feature may comprise an embedding feature by a deep neural network (e.g. a BERT transformer network or other sequence-to-sequence autoencoders).

In one or more exemplary methods, the one or more first appearance metrics may be determined based on a machine learning, ML, model, such as an output of a ML model. The one or more first appearance metrics may be inferred by the ML model. A ML model may comprise a Linear Regression Model, a Support-Vector-Machine, a Decision Tree Classifier (e.g. Random Forest, XGBoost), a Gaussian Mixture Model, a Hidden Markov Model, and/or a Neural Network. A Neural Network may for example comprise one or more of a linear feed forward layer, a convolutional layer, a recurrent layer, and an attention layer. A ML model may comprise a weighting of one or more speaker features. For example, the ML model may map e.g. a speaker intonation and/or a voice quality to a sentiment metric/type, a sentiment level, and/or a sentiment confidence score. A ML model may comprise parameters in the range of 100000 parameters to 1000000 parameters, e.g. 500000 to 1000000 parameters. A ML model may comprise layers in the range of 5 layers to 20 layers, e.g. 10 layers to 15 layers.

A ML model may be trained based on e.g. recording of calls, where a validator or supervisor, such as a human supervisor, have assigned sentiment identifiers/labels for a sentiment metric, and/or speaker feature labels for a speaker feature. A speaker feature may be determined algorithmically via signal processing algorithms. The one or more first appearance metrics may be inferred by the ML model. An input to the ML model may comprise audio data, such as audio data stored on a database of known audio data matching one or more appearance metrics, such as labels of appearance. A label of appearance may comprise a label assigned by a human and/or a ground truth, such as an age or a height from a passport or social registry. For example, the audio data input may comprise recording of calls, television shows, and/or movie actors or the like.

An input to the ML model may comprise one or more of an acoustic features, such as a tone feature. A tone feature may for example be a negative tone or a positive tone. Further an input to the ML model may comprise a spectrogram, a latent (hidden layer activations) representation of a (deep) neural network. An input to the ML model may comprise a static feature vector ("fingerprint"), such as a mean, a variance, a slope, peak distances, modulation spectra. An input to the ML model may comprise frame-wise (low-level) acoustic features such as a pitch of the voice, an energy level, spectral parameters (mel-frequency cepstrum, MFCC; e.g. log-MelSpec), spectral statistics (slope, roll-off-points), speech spectral envelope characteristics (e.g. formants, harmonics, ratios of harmonics and formants), and/or voice quality measures like harmonic to noise ratio, HNR, Jitter, and/or Shimmer. For example, an acoustic feature related to one or more appearance metrics, such as physical appearance, may comprise ratios of vowel formants which correlate with vocal tract length. For example, acoustic features may relate to one or more appearance metrics such as body size, voice quality features, e.g. HNR, Jitter and/or Shimmer which correlate with age (e.g. more breathiness, more Jitter for higher age), pitch may correlate with gender (e.g. males may have a pitch below 150 Hz and females may have a pitch above 150Hz). Further, acoustic features may for example comprise a phoneme inventory/histogram for language and dialect features, and/or average spectral envelope features e.g. for age and/or gender.

The one or more first sentiment metrics and the one or more first appearance metrics may be part of first speaker metric data. First speaker metric data may also be denoted agent metric data and/or caller metric data.

The method comprises determining a first speaker representation, also denoted SR_1, based on the first primary sentiment metric SM_1_1 and/or the first primary appearance metric AM_1_1. The first speaker representation SR_1 may comprise a first primary speaker representation, also denoted SR_1_1. Determining SR_1_1 may comprise generating the first primary speaker representation SR_1_1 based on SM_1_1 and AM_1_1. The first speaker representation may be determined based on a public and/or a customer registration. For example, for a recurring caller/customer the first primary sentiment metric SM_1_1 and/or the first primary appearance metric AM_1_1 may be refined over multiple calls/conversations, e.g. the more a voice is heard, the audio data is obtained, and the more confidently it may be determined that the speaker is e.g. a male. One or more sentiment and/or appearance metrics may be known, e.g. an age from a social register and/or a sentiment state from a previous conversation. The one or more known sentiment and/or appearance metrics may be used to improve accuracy of the determination of the speaker representation and/or used to determine the speaker representation.

The first speaker representation SR_1 may comprise a first secondary speaker representation, also denoted SR_1_2. The first speaker representation SR_1 may comprise a first tertiary speaker representation, also denoted SR_1_3. The first speaker representation SR_1 may comprise a first quaternary speaker representation, also denoted SR_1_4. The first speaker representation SR_1 may comprise a first quinary speaker representation, also denoted SR_1_5. Thus, determining a first speaker representation may comprise determining one or more of SR_1_2, SR_1_3, SR_1_4, and SR_1_5 based on the first audio signal, such as based on the first primary sentiment metric SM_1_1 and/or the first primary appearance metric AM_1_1. Determining a first speaker representation may comprise determining one or more of SR_1_2, SR_1_3, SR_1_4, and SR_1_5 based on the second audio signal, such as based on the second primary sentiment metric SM_2_1 and/or the second primary appearance metric AM_2_1.

The first speaker representation may also be denoted a first person representation.

The first speaker representation may be indicative of the first speaker state and/or the appearance of the first speaker in substantial real-time, e.g. with a delay less than 5 seconds, or less than 10 seconds. The first speaker representation may be indicative of a segment, such as a speech segment, which is analysed. For example, a voice activity detection module may identify one or more segments of speech/voice and discard the noise. A segment may for example be a speech segment of at least 5 seconds or at least 10 seconds. The voice activity detection module may detect pauses longer than e.g. 400 ms, 500 ms, or 1 second. A speech segment may be detected when a pause occurs, when another speaker starts speaking, or when a segment reaches a defined maximum length (e.g. at most 8 seconds) may indicate the end of the speech segment. For each speech segment one or more sentiment metrics and/or one or more appearance metrics may be determined. In one or more exemplary methods/systems, the first speaker representation, such as the first primary speaker representation, is updated with an update frequency of at least 0.2 Hz, e.g. every second, every 5 seconds, every 7 seconds, or every 10 seconds. The update frequency of the first primary speaker representation may be varied in time and may also depend on the conversation, such as conversation speed.

In other words, the first speaker representation, such as the first primary speaker representation, may be updated during the first speaker speaking and/or during a conversation, such as a telephone call, between the first speaker and second speaker. The first speaker representation may be indicative of or reflect a live, real-time, instant, and/or current sentiment and/or appearance of the first speaker. For example, the first speaker representation, such as the first primary speaker representation may be a real-time physical and emotional representation of the first speaker.

An advantage of having a real-time or substantially real-time first speaker representation may be that the user of the electronic device may see or be informed in real-time about changes in the sentiment and/or the first speaker appearance. Furthermore, the user of the electronic device may better imagine or conceive the sentiment and/or the appearance of the first speaker by seeing the first speaker representation including the first primary speaker representation. In other words, the user may have the experience of having a video talk or video call without receiving video signals.

The first speaker representation may give real-time feedback to the user regarding the first speaker talking, e.g. feedback about first speaker traits, such as first speaker state and/or appearance of the first speaker. The first speaker representation may provide a realistic representation of the first speaker. The first speaker representation may provide a personification of the first speaker, a portrait of the first speaker, a shape of the first speaker, a sketch of the first speaker, and/or a gamification of the first speaker.

The first speaker representation may comprise sound representations, such as auditory feedback and/or audio icons.

The method comprises outputting, via the interface of the electronic device, the first speaker representation SR_1. Outputting the first speaker representation SR_1 may comprise displaying a first user interface indicative of the first speaker representation.

A user interface may comprise one or more, such as a plurality of, user interface objects. For example, the first user interface may comprise one or more first user interface objects, such as a first primary user interface object and/or a first secondary user interface object.

A user interface object may refer herein to a graphical representation of an object that is displayed on an interface of the electronic device, such as a display. The user interface object may be user-interactive, or selectable by a user input. For example, an image (e.g., icon), a button, and text (e.g., hyperlink) each optionally constituting a user interface object. The user interface object may form part of a widget. A widget may be seen as a mini-application that may be used by the user.

In one or more exemplary methods, the one or more first sentiment metrics SM_1_i includes a first secondary sentiment metric also denoted SM_1_2, indicative of a secondary sentiment state of the first speaker.

The secondary sentiment state may be different from the primary sentiment state. In other words, SM_1_2 may be indicative of a secondary emotion or sentiment of the first speaker. SM_1_2 may be a less dominating sentiment state than the primary sentiment state and/or a second sentiment state in time of the first speaker. The secondary sentiment state may be one of disappointed, bored, afraid, sad, negative, fearful, panicking, dissatisfied, angry, surprised, worried, wondering, not understanding, thinking, neutral, positive, very positive, glad, friendly, confident, excited, pleased, satisfied, aroused, content, relaxed, energetic, enthusiastic, service-minded, helpful, interested, and happy.

In one or more exemplary methods/systems, the secondary sentiment state of the first speaker may be selected from a secondary set of sentiment states.

A first sentiment metric $SM\_1\_i$ may comprise a first sentiment type identifier, also denoted $ST\_ID\_1\_i$, where i is an index. In other words, determining one or more first sentiment metrics $SM\_1\_i$ may comprise determining a first sentiment type identifier $ST\_ID\_1\_i$, e.g. a first secondary sentiment type identifier $ST\_ID\_1\_2$ of the first secondary sentiment metric $SM\_1\_2$. A sentiment type identifier is indicative of a sentiment state of a speaker.

A sentiment type identifier may for example be a label, a number or value, such as an integer, corresponding to a specific sentiment (state), a sentiment type and/or a sentiment class. For example, $ST\_ID\_1\_i$ may respectively be selected from the same or different sets of sentiment type identifiers. For example, $ST\_ID\_1\_2$ may be selected from a secondary set of sentiment type identifiers.

In one or more exemplary methods, the first secondary sentiment metric $SM\_1\_2$ comprises a first secondary sentiment type identifier $ST\_ID\_1\_2$ selected from a secondary set of sentiment type identifiers $ST\_ID\_SET\_2$, where $ST\_ID\_SET\_2$ comprises a plurality of sentiment type identifiers, e.g. including at least three, four, five or more sentiment type identifiers.

In one or more exemplary methods, the secondary set of sentiment type identifiers $ST\_ID\_SET\_2$ is given by:

$$ST\_ID\_SET\_2 = \{1, 2, 3, 4, 5\},$$

where "1" is indicative of a sentiment, such as "Very negative", "2" is indicative of a sentiment, such as "Negative", "3" is indicative of a sentiment, such as "Neutral", optional "4" is indicative of a sentiment, such as "Positive", and optional "5" is indicative of a sentiment, such as "Very positive".

In one or more exemplary methods, the secondary set of sentiment type identifiers $ST\_ID\_SET\_2$ is given by:
$ST\_ID\_SET\_2 = \{$"Very negative", "Negative", "Neutral", "Positive", "Very positive"$\}$, e.g. where "Very negative" and/or "Very positive" is optional.

In one or more exemplary methods, the secondary set of sentiment type identifiers $ST\_ID\_SET\_2$ is given by:

$$ST\_ID\_SET\_2 = \{1, 2, 3, 4, 5\},$$

where "1" is indicative of a sentiment, such as "Angry", "2" is indicative of a sentiment, such as "Low Energy", "3" is indicative of a sentiment, such as "OK Energy", optional "4" is indicative of a sentiment, such as "Friendly, engaged, energetic", and optional "5" is indicative of a sentiment, such as "Highly engaged".

A set of sentiment type identifiers, such as the secondary set of sentiment type identifiers and/or the secondary set of sentiment type identifiers, may comprise at least three or at least four different sentiment type identifiers, such as five, six, seven, eight, nine, or more sentiment type identifiers. In other words, each sentiment or sentiment type may have a corresponding $ST\_ID\_1\_i$. For example, the first secondary sentiment metric $SM\_1\_2$ may comprise a first secondary sentiment type identifier $ST\_ID\_1\_2$ indicative of or corresponding to the secondary sentiment state or the first speaker state being "positive".

A first sentiment metric $SM\_1\_i$ may comprise a sentiment level, also denoted $SL\_1\_i$, i=1, 2, ..., O, where O is the number of sentiment levels. In other words, determining $SM\_1\_i$ may comprise determining $SL\_1\_i$, e.g. determining $SM\_1\_2$ may comprise determining a first secondary sentiment level $SL\_1\_2$. A sentiment level $SL\_1\_i$ may indicate a level of the i'th sentiment type. In other words, $SL\_1\_i$ may indicate a degree of the i'th sentiment type. For example, when $ST\_ID\_1\_2$ corresponds to the first speaker state "positive", a first secondary sentiment level $SL\_1\_2$ may be indicative of or correspond to a degree of the sentiment "positive", e.g. at a scale, e.g. from 0 to 1 or from 1 to 10, or selected from "low", "medium", and "high". In other words, a sentiment level of a sentiment metric may be on a scale, e.g. from 0 to 1 or from 1 to 10.

A first sentiment metric $SM\_1\_i$ may comprise a confidence score, respectively denoted $SCS\_1\_i$, i=1, 2, ..., P, where P is the number of confidence scores. In other words, determining $SM\_1\_i$ may comprise determining a first confidence score $SCS\_1\_i$, e.g. determining first secondary sentiment metric $SM\_1\_2$ may comprise determining a first secondary confidence score $SCS\_1\_2$. A confidence score of a sentiment metric may be indicative of a score or a probability of the determined sentiment metric, e.g. sentiment type identifier and/or sentiment level, being correct, e.g. the sentiment state or sentiment type (as identified by the sentiment type identifier of the sentiment metric) being correct. For example, $SCS\_1\_2 = 0.88$ may be indicative of a probability of 88% that the determined $ST\_ID\_1\_2$, e.g. being "positive", is correct.

In one or more exemplary methods, the one or more first appearance metrics $AM\_1\_i$ includes a first secondary appearance metric, also denoted $AM\_1\_2$, indicative of a secondary appearance of the first speaker.

A first appearance metric $AM\_1\_i$ may comprise a first appearance identifier, also denoted $A\_ID\_1\_i$, where i is an index of the i'th first appearance metric. A first appearance identifier may be indicative of one of a gender metric, a weight metric, a height metric, an age metric, a language metric, a language capability metric, a hearing capability metric, and an understanding capability metric. In other words, determining AM_1_i may comprise determining A_ID_1_i, including a first secondary appearance identifier A_ID_1_2 of a first secondary appearance metric AM_1_2.

In one or more exemplary methods, the first secondary appearance metric AM_1_2 comprises a first secondary appearance identifier A_ID_1_2 optionally selected from a secondary set of appearance identifiers A_ID_SET_1, where A_ID_SET_1 comprises a plurality of appearance identifiers, e.g. including at least three, four, five or more appearance type identifiers. In one or more exemplary methods, the first secondary appearance metric AM_1_2 is a gender metric, i.e. first secondary metric identifier A_ID_1_2 is indicative of gender, e.g. A_ID_1_2 = "Gender" or A_ID_1_2 = 1 that can be mapped to gender via a table.

In one or more exemplary methods, the first secondary appearance metric AM_1_2 comprises a first secondary appearance identifier A_ID_1_2 optionally selected from a secondary set of appearance identifiers A_ID_SET_2, where A_ID_SET_2 comprises a plurality of appearance identifiers, e.g. including at least three, four, five or more appearance identifiers. In one or more exemplary methods, the first secondary appearance metric AM_1_2 is an age metric, i.e. first secondary metric identifier A_ID_1_2 is indicative of age, e.g. A_ID_1_2 = "Age" or A_ID_1_2 = 2 that can be mapped to age via a table.

A set of appearance identifiers may comprise two or at least three or at least four different appearance identifiers, such as five, six, seven, eight, nine, or more appearance identifiers. For example, the first secondary appearance metric AM_1_2 may comprise a first secondary appearance identifier A_ID_1_2 indicative of or corresponding to the secondary appearance of the first speaker, e.g. one of gender, weight, height, age, language, language capability, hearing capability, and understanding capability. For example, a first secondary appearance identifier A_ID_1_2 may be indicative of or correspond to a first secondary appearance of the first speaker, e.g. one of gender, weight, height, age, language, language capability, hearing capability, and understanding capability. The first secondary appearance identifier is optionally different from the first secondary appearance identifier.

A first appearance metric AM_1_i may comprise an appearance level, also denoted AL_1_i, i=1, 2, ..., R, where R is the number of appearance levels. In other words, determining AM_1_i may comprise determining AL_1_i, e.g. determining AM_1_2 may comprise determining a first secondary appearance level AM_1_2. The first appearance level AL_1_i may indicate a level, value, range, or label of the appearance metric AM_1_i as indicated by the appearance identifier A_ID_1_i. In other words, a first appearance level AL_1_i may indicate a level, value, range, or label of the first appearance metric AM_1_i. For example, when A_ID_1_2 corresponds to the first secondary appearance of the first speaker being "gender", a first secondary appearance level AL_1_2 may be indicative of or correspond to "male", "female" or optionally "unisex". For example, when first secondary appearance identifier A_ID_1_2 corresponds to the first secondary appearance metric of the first speaker being "height", a first secondary appearance level AL_1_2 may be indicative of or correspond to "short", "medium" or "tall". For example, when first secondary appearance identifier A_ID_1_2 corresponds to the first secondary appearance of the first speaker being "height", a first secondary appearance level AL_1_2 may be indicative of or correspond to "less than 160 cm", "between 160 cm and 185 cm" or "taller than 185 cm".

For example, when a first appearance identifier, such as first tertiary appearance identifier A_ID_1_3, corresponds to a first appearance metric, such as first tertiary appearance metric AM_1_3, of the first speaker being "age", a first tertiary appearance level AL_1_3 may be indicative of or correspond to an age range such as "younger than 20 years", "20-40 years", "40-60 years", or "older than 60 years" or an age label, such as "young", "mid-aged" or "old".

A first appearance metric AM_1_i may comprise a confidence score, also denoted ACS_1_i, i=1, 2, ..., S, where S is the number of confidence scores. In other words, determining a first appearance metric AM_1_i may comprise determining a first appearance confidence score ACS_1_i, e.g. determining a first secondary appearance metric AM_1_2 may comprise determining a first secondary appearance confidence score ACS_1_2. A first appearance confidence score ACS_1_i of an appearance metric AM_1_i may be indicative a score or a probability of the determined first appearance metric AM_1_i, such as first appearance level AL_1_i, being correct, e.g. the appearance metric or appearance level being correct. For example, ACS_1_2 = 0.95 may be indicative of a probability of 95% that a determined AL_1_2 being "male" is correct.

In one or more exemplary methods, the first speaker representation is a caller representation. The first speaker representation may be a first participant representation, e.g. in or during a meeting. The first speaker representation may be a first presenter representation, e.g. in or during a talk or presentation. The caller representation may be a representation of a person calling a call center, such as a support call center.

In one or more exemplary methods, the first speaker representation is an agent representation. The agent representation may be a representation of an agent answering calls at a call center, such as a support call center.

In one or more exemplary methods, determining the first speaker representation SR_1, such as determining a first primary speaker representation SR_1_1 of the first speaker representation SR_1, comprises determining one or more first features F_1_i, i=1, ..., K, where K is the number of first features. The one or more first features may include a first primary feature also denoted F_1_1 and/or a first secondary feature also denoted F_1_2 of the first primary speaker representation SR_1_1. The number L of first features may be 2, 3, 4, 5, or more. The first primary speaker representation S_1_1 may be or comprise a first avatar, a first emoji, a first smiley, a first icon, a first image, a first animation, and/or a first visual graphical representation simulation.

In one or more exemplary methods, determining the first speaker representation SR_1 comprises determining a first primary feature, also denoted F_1_1, and/or a first secondary feature, also denoted F_1_2, of a first avatar based on the first primary sentiment metric SM_1_1 and/or based on the first primary appearance metric AM_1_1. Optionally, the first speaker representation, such as a first primary speaker representation SR_1_1 of the first speaker representation SR_1, comprises the first avatar. Determining SR_1, such as determining SR_1_1, may comprise determining one or more features, such as first features, based on one or more sentiment metrics, such as first sentiment metrics. Determining SR_1, such as determining SR_1_1, may comprise determining one or more features, such as first features, based on one or more sentiment metrics, such as first sentiment metrics and/or one or more appearance metrics. Determining SR_1, such as determining SR_1_1, may comprise determining F_1_1 based on SM_1_1 and/or AM_1_1. In other words, the first speaker representation SR_1, such as the first primary speaker representation SR_1_1, may be based on one or more first features, e.g. based on F_1_1 and F_1_2.

The first primary feature F_1_1 may be indicative of the first primary sentiment metric SM_1_1. In other words, F_1_1 may be indicative of the primary sentiment state indicated by SM_1_1. For example, when the primary sentiment state indicated by SM_1_1 is negative, F_1_1 may be indicative of a negative feature, e.g. negative eyes or negative mouth.

F_1_1 may be selected from a list of features and/or a class of features. F_1_1 may be selected or chosen from a set of features, e.g. a set of feature types and a number or value may be assigned to each feature type of the set of feature types.

The first primary representation, such as the first avatar, may be indicative of the primary sentiment state of the first speaker. The first avatar may be a real-time physical and/or emotional representation of the first speaker. The first avatar may be a representation of a facial expression being indicative of the sentiment state of the speaker and/or the appearance of the first speaker. The term representation may be understood as one or more of an avatar, a smiley, an emoji, an emoticon, a portrait, a personification, a sketch, an animation, a visual graphical representation simulation, and a shape. The first primary representation, such as the first avatar, may be a sum of one or more first features representing one or more sentiments or sentiment states of the first speaker and/or one or more appearances of the first speaker. The first primary representation, such as the first avatar may at least comprise one feature, at least two features, at least five features, at least ten features.

In one or more exemplary methods, the first primary feature F_1_1 is selected from a mouth feature, an eye feature, a nose feature, a forehead feature, an eyebrow feature, a hair feature, an ear feature, a beard feature, a gender feature, a cheek feature, an accessory feature, a skin feature, a body feature, a torso feature, a leg feature, a height feature, a foot feature, and a head dimension feature.

First features F_1_i, such as F_1_1, may comprise a feature identifier, also denoted F_ID_i, i=1, 2, ...L, where L is the number of feature identifiers. In other words, determining one or more first features of the first primary representation, may comprise determining a first primary identifier F_ID_1_1 of the first primary feature.

The feature identifiers, e.g. of the first features, may for example be a number, value, such as an integer, or a label corresponding to or indicative of a feature type. For example, F_ID_1_i may be chosen from a set of feature types and a number or value may be assigned to each feature type of the set of feature types. The set of feature types may comprise at least five different feature types, e.g. L=5, at least ten different feature types, e.g. L=10, or at least twenty feature types, e.g. L=20. For example, the first feature type identifier F_ID_1 may be indicative or correspond to the feature type "eyes", "mouth", "nose", "forehead", "eyebrow", "hair", "ear", "beard", "gender", "cheek", "accessory", "skin", "body, or "head dimension".

First features F_1_i, such as F_1_1, may comprise a feature level, also denoted FL_i, i=1, 2, ...F, where F is the number of feature levels. In other words, determining one or more first features of the first primary representation may comprise determining a first primary feature level FL_1_1 of the first primary feature. The first feature level FL_1_i may indicate a level, value, range, or label of the first feature F_1_i, e.g. as indicated by the feature identifier F_ID_1_i. In other words, a first feature level FL_1_i may indicate a level, value, range, or label of the first feature F_1_i. For example, when F_ID_1_1 corresponds to the first feature of the first speaker being "head dimension", a first primary feature level FL_1_1 may be indicative of or correspond to "male head dimension", "female head dimension" or optionally "unisex head dimension", e.g. based on one or more sentiment metrics and/or one or more appearance metrics. First features F_1_i, such as F_1_1, may comprise a plurality of feature levels, also denoted F_1_i_j. Thereby, a first feature may be based on a plurality of metrics, such as a sentiment metric and an appearance metric. For example, a first feature, such as F_1_2, having feature identifier F_ID_1_2 = "eyes" may comprise first feature levels FL_1_2_1 = "angry" and FL_1_2_2 = "female", in turn allowing the eyes feature of the first speaker representation to indicate an angry female.

In one or more exemplary methods/systems, determining one or more first features $F\_1\_i$, is based on, such as mapped from, one or more first sentiment metrics and/or one or more first appearance metrics.

Determining a first primary speaker representation may comprise selecting a first avatar from a library of avatars, e.g. based on one or more of first features, first sentiment metric(s), and first appearance metric(s). Determining a first primary speaker representation may comprise building and/or generating a first avatar comprising one or more first feature icons, optionally where one or more, such as each, first feature icon is based on one or more first features. In other words, determining a first primary speaker representation may comprise selecting first feature icons from a library of first feature icons optionally based on one or more of first features, first sentiment metric(s), and first appearance metric(s) and including the first feature icons in the first primary speaker representation, such as in the first avatar.

In one or more exemplary methods, determining the first speaker representation $SR\_1$, such as determining first primary speaker representation $SR\_1\_1$, comprises determining a first secondary feature $F\_1\_2$ of the first primary speaker representation $SR\_1\_1$, such as the first avatar, based on the first primary sentiment metric $SM\_1\_1$ and/or based on the first primary appearance metric $AM\_1\_1$.

Determining $SR\_1$ may comprise determining $F\_1\_2$ based on $SM\_1\_1$ and/or $AM\_1\_1$. In one or more exemplary methods, determining $SR\_1$ may comprise determining $F\_1\_2$ based on $SM\_1\_1$, $SM\_1\_2$, $AM\_1\_1$, and/or $AM\_1\_2$.

The first secondary feature $F\_1\_2$ may be indicative of the first primary appearance metric $AM\_1\_1$. In other words, $F\_1\_2$ may be indicative of the primary appearance indicated by $AM\_1\_1$. For example, when the primary appearance indicated by $AM\_1\_1$ is "old", $F\_1\_2$ may be indicative of an aging feature, e.g. wrinkled eyes or wrinkled mouth.

$F\_1\_2$ may be selected from a list of features and/or a class of features. $F\_1\_2$ may be selected or chosen from a set of features, e.g. a set of feature types and a number or value may be assigned to each feature type of the set of feature types.

In one or more exemplary methods, the first secondary feature is different from the first primary feature and is selected from a mouth feature, an eye feature, a nose feature, a forehead feature, an eyebrow feature, a hair feature, an ear feature, a beard feature, a gender feature, a cheek feature, an accessory feature, a skin feature, a body feature, a torso feature, a leg feature, a height feature, a foot feature, and a head dimension feature.

First features $F\_1\_i$, such as $F\_1\_2$, may comprise a feature identifier, also denoted $F\_ID\_i$, i=1, 2, ...L. In other words, determining one or more first features of the first primary representation, may comprise determining a first secondary identifier $F\_ID\_1\_2$ of the first secondary feature.

The feature identifiers, e.g. of the first features, may for example be a number, value, such as an integer, or a label corresponding to or indicative of a feature type. For example, $F\_ID\_1\_i$ may be chosen from a set of feature types and a number or value may be assigned to each feature type of the set of feature types. The set of feature types may comprise at least five different feature types, e.g. L=5, at least ten different feature types, e.g. L=10, or at least twenty feature types, e.g. L=20. For example, the first feature type identifier $F\_ID\_1$ may be indicative or correspond to the feature type "eyes", "mouth", "nose", "forehead", "eyebrow", "hair", "ear", "beard", "gender", "cheek", "accessory", "skin", "body, or "head dimension".

First features $F\_1\_i$, such as $F\_1\_2$, may comprise a feature level, also denoted $FL\_i$, i=1, 2, ...F. In other words, determining one or more first features of the first primary representation may comprise determining a first secondary feature level $FL\_1\_2$ of the first secondary feature. The first feature level $FL\_1\_i$ may indicate a level, value, range, or label of the first feature $F\_1\_i$, e.g. as indicated by the feature identifier $F\_ID\_1\_i$. **In** other words, a first feature level $FL\_1\_i$ may indicate a level, value, range, or label of the first feature $F\_1\_i$. For example, when $F\_ID\_1\_2$ corresponds to the first feature of the first speaker being "head dimension", a first secondary feature level $FL\_1\_2$ may be indicative of or correspond to "male head dimension", "female head dimension" or optionally "unisex head dimension", e.g. based on one or more sentiment metrics and/or one or more appearance metrics. First features $F\_1\_i$, such as $F\_1\_2$, may comprise a plurality of feature levels, also denoted $F\_1\_i\_j$. Thereby, a first feature may be based on a plurality of metrics, such as a sentiment metric and an appearance metric. For example, a first feature, such as $F\_1\_2$, having feature identifier $F\_ID\_1\_2$ = "eyes" may comprise first feature levels $FL\_1\_2\_1$ = "angry" and $FL\_1\_2\_2$ = "female", in turn allowing the eyes feature of the first speaker representation to indicate an angry female.

In one or more exemplary methods, obtaining one or more audio signals comprises obtaining a second audio signal, also denoted $AS\_2$. The second audio signal may be representative of second speech/voice of a second speaker. The second speaker may be a caller, an agent, or a second participant in a telephone conversation or a meeting.

Obtaining one or more audio signals may comprise obtaining one or more audio inputs, such as a second audio input. In other words, the second audio signal may be based on the second audio input. The second audio signal may be obtained from a call or conversation between the user and another person, e.g. a first call or a first conversation. The second speaker may be the person speaking/talking the second most during the first call and/or the first conversation. The second speaker may be the second person speaking during the first call and/or first conversation. The second speaker may be a person speaking with a person of interest, e.g. being the first speaker. The second speaker may be a user wanting a representation of the first speaker, such as the first speaker representation. The second audio signal may be obtained from the electronic device recording second audio input from a second speaker, such as recording the second speaker speaking or talking. Obtaining one or more audio signals may comprise generating one or more audio signals, including the second audio signal. The second audio signal may be based on the second audio input. The second audio signal may comprise a second speaker audio signal. The second audio signal may be an agent audio signal or a caller audio signal, and a second audio signal is the other.

In one or more exemplary methods, the method comprises determining one or more second sentiment metrics, also denoted SM_2_i, i=1, 2, ..., A, where A is the number of second sentiment metrics.

The one or more second sentiment metrics, such as SM_2_1 and/or SM_2_2, are indicative of a second speaker state, i.e. one or more first sentiment states of the second speaker, and may be based on the first audio signal and/or the second audio signal. The one or more second sentiment metrics SM_2_i may comprise one or more parameters indicative of the second speaker state.

The one or more second sentiment metrics SM_2_i include a second primary sentiment metric, also denoted SM_2_1 indicative of a primary sentiment state of a second speaker.

In other words, SM_2_1 may be indicative of a primary emotion of the second speaker. SM_2_1 may be indicative of a dominating sentiment state and/or a second sentiment state in time of the second speaker. The primary sentiment state may be one of disappointed, bored, afraid, sad, negative, very negative, fearful, frustrated, annoyed, panicking, hesitant, dissatisfied, angry, surprised, worried, wondering, not understanding, thinking, neutral, positive, very positive, glad, friendly, confident, excited, pleased, satisfied, aroused, content, relaxed, energetic, enthusiastic, service-minded, helpful, interested, and happy. In one or more exemplary methods/systems, the primary sentiment state of the second speaker may be selected from a primary set of sentiment states.

A second sentiment metric SM_2_i may comprise a second sentiment type identifier, also denoted ST_ID 2_i, i=1, 2, ... B, where B is the number of second sentiment type identifiers, where i is an index. In other words, determining one or more second sentiment metrics SM_2_i may comprise determining a second sentiment type identifier ST_ID_2_i, e.g. a second primary sentiment type identifier ST_ID_2_1 of the second primary sentiment metric SM_2_1. A sentiment type identifier is indicative of a sentiment state of a speaker.

A sentiment type identifier may for example be a label, a number or value, such as an integer, corresponding to a specific sentiment (state), a sentiment type and/or a sentiment class. For example, ST_ID_2_i may respectively be selected from the same or different sets of sentiment type identifiers. For example, ST_ID_2_1 may be selected from a primary set of sentiment type identifiers and/or ST_ID_2_2 may be selected from a secondary set of sentiment type identifiers. The primary set of sentiment type identifiers may be different from or the same as the secondary set of sentiment type identifiers. The primary set of sentiment type identifiers and the secondary set of sentiment type identifiers may share one or more, such as a plurality of, sentiment type identifiers.

In one or more exemplary methods, the second primary sentiment metric SM_2_1 comprises a second primary sentiment type identifier ST_ID_2_1 selected from a primary set of sentiment type identifiers ST_ID_SET_1, where ST_ID_SET_1 comprises a plurality of sentiment type identifiers, e.g. including at least three, four, five or more sentiment type identifiers.

In one or more exemplary methods, the primary set of sentiment type identifiers ST_ID_SET_1 is given by:

$$ST\_ID\_SET\_1 = \{1, 2, 3, 4, 5\},$$

where "1" is indicative of a sentiment, such as "Very negative", "2" is indicative of a sentiment, such as "Negative", "3" is indicative of a sentiment, such as "Neutral", optional "4" is indicative of a sentiment, such as "Positive", and optional "5" is indicative of a sentiment, such as "Very positive".

In one or more exemplary methods, the primary set of sentiment type identifiers ST_ID_SET_1 is given by:
ST_ID_SET_1 = {"Very negative", "Negative", "Neutral", "Positive", "Very positive"}, e.g. where "Very negative" and/or "Very positive" is optional.

In one or more exemplary methods, the primary set of sentiment type identifiers ST_ID_SET_1 is given by:

$$ST\_ID\_SET\_1 = \{1, 2, 3, 4, 5\},$$

where "1" is indicative of a sentiment, such as "Angry", "2" is indicative of a sentiment, such as "Low Energy", "3" is indicative of a sentiment, such as "OK Energy", optional "4" is indicative of a sentiment, such as "Friendly, engaged, energetic", and optional "5" is indicative of a sentiment, such as "Highly engaged".

A set of sentiment type identifiers, such as the primary set of sentiment type identifiers and/or the secondary set of sentiment type identifiers, may comprise at least three or at least four different sentiment type identifiers, such as five, six, seven, eight, nine, or more sentiment type identifiers. In other words, each sentiment or sentiment type may have a corresponding ST_ID_2_i. For example, the second primary sentiment metric SM_2_1 may comprise a second primary sentiment type identifier ST_ID_2_1 indicative of or corresponding to the primary sentiment state or the second speaker state being "positive".

A second sentiment metric SM_2_i may comprise a sentiment level, also denoted SL_2_i, i=1, 2, ..., C, where C is the number of sentiment levels. In other words, determining SM_2_i may comprise determining SL_2_i, e.g. determining SM_2_1 may comprise determining a second primary sentiment level SL_2_1. A sentiment level SL_2_i may indicate a level of the i'th sentiment type. In other words, SL_2_i may indicate a degree of the i'th sentiment type. For example, when ST_ID_2_1 corresponds to the second speaker state "positive", a second primary sentiment level SL_2_1 may be indicative of or correspond to a degree of the sentiment "positive", e.g. at a scale, e.g. from 0 to 1 or from 1 to 10, or selected from "low", "medium", and "high". In other words, a sentiment level of a sentiment metric may be on a scale, e.g. from 0 to 1 or from 1 to 10.

A second sentiment metric SM_2_i may comprise a confidence score, respectively denoted SCS_2_i, i=1, 2, ..., C, where C is the number of confidence scores. In other words, determining SM_2_i may comprise determining a second confidence score SCS_2_i, e.g. determining second primary sentiment metric SM_2_1 may comprise determining a second primary confidence score SCS_2_1. A confidence score of a sentiment metric may be indicative of a score or a probability of the determined sentiment metric, e.g. sentiment type identifier and/or sentiment level, being correct, e.g. the sentiment state or sentiment type (as identified by the sentiment type identifier of the sentiment metric) being correct. For example, SCS_2_1 = 0.88 may be indicative of a probability of 88% that the determined ST_ID_2_1, e.g. being "positive", is correct.

Determining one or more second sentiment metrics indicative of a second speaker state may comprise extracting one or more speaker features from the second audio signal, e.g. wherein the one or more second sentiment metrics are based on the one or more speaker features. The one or more speaker features may comprise paralinguistic features. The one or more speaker features may for example comprise a speaker tone feature, a speaker intonation feature, a speaker power or volume feature, a speaker pitch feature, a speaker quality feature, a speaker rate feature, a linguistic feature, an acoustic feature, and/or a speaker spectral band energy feature. A spectral band energy feature may comprise individual bins of spectrograms indicating a signal energy level at a given frequency.

A linguistic feature may comprise specific sentiment related words such as positive and/or negative words. The linguistic feature may be determined based on a text transcript of the audio signal. The text transcript may be obtained by human annotators or using an automatic speech recognition (speech to text) algorithm or service. The linguistic feature may comprise an embedding feature by a deep neural network (e.g. a BERT transformer network or other sequence-to-sequence autoencoders).

In one or more exemplary methods, the one or more second sentiment metrics may be determined based on a machine learning, ML, model, such as an output of a ML model. A ML model may comprise a Linear Regression Model, a Support-Vector-Machine, a Decision Tree Classifier (e.g. Random Forest, XGBoost), a Gaussian Mixture Model, a Hidden Markov Model, and/or a Neural Network. A Neural Network may for example comprise one or more of a linear feed forward layer, a convolutional layer, a recurrent layer, and an attention layer. A ML model may comprise a weighting of one or more speaker features. For example, the ML model may map e.g. a speaker intonation and/or a voice quality to a sentiment metric/type, a sentiment level, and/or a sentiment confidence score. A ML model may comprise parameters in the range of 100,000 parameters to 1,000,000 parameters, e.g. 500,000 to 1,000,000 parameters. A ML model may comprise layers in the range of 5 layers to 20 layers, e.g. 10 layers to 15 layers.

A ML model may be trained based on e.g. recording of calls, where a validator or supervisor, such as a human supervisor, have assigned sentiment identifiers/labels for a sentiment metric, and/or speaker feature labels for a speaker feature. A speaker feature may be determined algorithmically via signal processing algorithms. The one or more second sentiment metrics may be inferred by the ML model. An input to the ML model may comprise one or more of an acoustic features, such as a tone feature. A tone feature may for example be a negative tone or a positive tone. Further an input to the ML model may comprise a spectrogram, a latent (hidden layer activations) representation of a (deep) neural network. An input to the ML model may comprise a static feature vector ("fingerprint"), such as a mean, a variance, a slope, peak distances, modulation spectra. An input to the ML model may comprise frame-wise (low-level) acoustic features such as a pitch of the voice, an energy level, spectral parameters (mel-frequency cepstrum, MFCC; e.g. logMelSpec), spectral statistics (slope, roll-off-points), speech spectral envelope characteristics (e.g. formants, harmonics, ratios of harmonics and formants), and/or voice quality measures like harmonic to noise ratio, HNR, Jitter, and/or Shimmer.

In one or more exemplary methods, the method comprises obtaining one or more second appearance metrics, also denoted AM_2_i, i=1, 2, ... D, where D is the number of second appearance metrics of or associated with the second speaker. Obtaining one or more second appearance metrics may comprise determining one or more second appearance metrics.

An appearance metric is indicative of an appearance of a speaker. An appearance metric may comprise one or more of an appearance identifier, appearance level(s), and a confidence score, and may be indicative of an appearance of the second speaker, e.g. based on the first audio signal and/ or a second audio signal. Obtaining one or more second appearance metrics may comprise retrieving second appearance metric(s) from a database, e.g. based on information related to the second speaker stored in the database. When the second speaker is a user/agent of the system, obtaining one or more second appearance metrics may comprise retrieving second appearance metric(s) from an employee database, e.g. comprising information related to the appearance of the employees. Alternatively or additionally, the second speaker, e.g. being an agent, may pick or choose one or more second primary features and/or one or more second speaker representations himself/herself, such as from a database of second primary features and/or of second speaker representations. The one or more second appearance metrics AM_2_i may comprise one or more parameters indicative of the appearance of the second speaker. The one or more second appearance metrics AM_2_i include a second primary appearance metric, also denoted AM_2_1, indicative of a primary appearance of the second speaker and/or a second secondary appearance metric, also denoted AM_2_2, indicative of a secondary appearance of the second speaker.

In other words, AM_2_1 may be indicative of a primary physical appearance of the second speaker. AM_2_1 may be selected from a gender metric, a weight metric, a height metric, an age metric, a language metric, a language capability metric, a hearing capability metric, a dialect metric, a health metric (e.g. respiratory condition, speech deficiency, and/or speaking impairment), a personality metric (e.g. extrovert or introvert person), and an understanding capability metric (e.g. based on age metric, health metric, and/or gender metric). The understanding capability metric may for be relevant when an old person have difficulties hearing a conversation, or a foreigner who's not comfortable in the spoken language. The understanding capability metric may provide an indication to the user e.g. that he/she shall speak slower and more articulated.

A second appearance metric AM_2_i may comprise a second appearance identifier, also denoted A_ID_2_i, where i is an index of the i'th second appearance metric. A second appearance identifier may be indicative of one of a gender metric, a weight metric, a height metric, an age metric, a language metric, a language capability metric, a hearing capability metric, and an understanding capability metric. In other words, determining AM_2_i may comprise determining A_ID_2_i, including a second primary appearance identifier A_ID_2_1 of a second primary appearance metric AM_2_1 and/or a second secondary appearance identifier A_ID_2_2 of a second secondary appearance metric AM_2_2.

An appearance identifier may for example be a label, a number or a value, such as an integer, corresponding to a specific appearance metric, appearance type and/or an appearance class. For example, A_ID_2_i may be chosen from a set of appearance types, e.g. including one or more of gender, height, weight, height, age, language, language capability, hearing capability, and understanding capability. The appearance metric identifier may be a label or a number that is mapped to and/or indicative of the type of appearance metric.

In one or more exemplary methods, the second primary appearance metric AM_2_1 comprises a second primary appearance identifier A_ID_2_1 optionally selected from a primary set of appearance identifiers A_ID_SET_1, where A_ID_SET_1 comprises a plurality of appearance identifiers, e.g. including at least three, four, five or more appearance type identifiers. In one or more exemplary methods, the second primary appearance metric AM_2_1 is a gender metric, i.e. second primary metric identifier A_ID_2_1 is indicative of gender, e.g. A_ID_2_1 = "Gender" or A_ID_2_1 = 1 that can be mapped to gender via a table.

In one or more exemplary methods, the second secondary appearance metric AM_2_2 comprises a second secondary appearance identifier A_ID_2_2 optionally selected from a secondary set of appearance identifiers A_ID_SET_2, where A_ID_SET_2 comprises a plurality of appearance identifiers, e.g. including at least three, four, five or more appearance identifiers. In one or more exemplary methods, the second secondary appearance metric AM_2_2 is an age metric, i.e. second secondary metric identifier A_ID_2_2 is indicative of age, e.g. A_ID_2_2 = "Age" or A_ID_2_2 = 2 that can be mapped to age via a table.

A set of appearance identifiers may comprise two or at least three or at least four different appearance identifiers, such as five, six, seven, eight, nine, or more appearance identifiers. For example, the second primary appearance metric AM_2_1 may comprise a second primary appearance identifier A_ID_2_1 indicative of or corresponding to the primary appearance of the second speaker, e.g. one of gender, weight, height, age, language, language capability, hearing capability, and understanding capability. For example, a second secondary appearance identifier A_ID_2_2 may be indicative of or correspond to a second secondary appearance of the second speaker, e.g. one of gender, weight, height, age, language, language capability, hearing capability, and understanding capability. The second secondary appearance identifier is optionally different from the second primary appearance identifier.

A second appearance metric AM_2_i may comprise an appearance level, also denoted AL_2_i, i=1, 2, ..., E, where E is the number of appearance levels. In other words, determining AM_2_i may comprise determining AL_2_i, e.g. determining AM_2_1 may comprise determining a second primary appearance level AM_2_1. The second appearance level AL_2_i may indicate a level, value, range, or label of the appearance metric AM_2_i as indicated by the appearance identifier A_ID_2_i. In other words, a second appearance level AL_2_i may indicate a level, value, range, or label of the second appearance metric AM_2_i. For example, when A_ID_2_1 corresponds to the second primary appearance of the second speaker being "gender", a second primary appearance level AL_2_1 may be indicative of or correspond to "male", "female" or optionally "unisex". For example, when second secondary appearance identifier A_ID_2_2 corresponds to the second secondary appearance metric of the second speaker being "height", a second secondary appearance level AL_2_2 may be indicative of or correspond to "short", "medium" or "tall". For example, when second secondary appearance identifier A_ID_2_2 corresponds to the second secondary appearance of the second speaker being "height", a second secondary appearance level AL_2_2 may be indicative of or correspond to "less than 160 cm", "between 160 cm and 185 cm" or "taller than 185 cm".

For example, when a second appearance identifier, such as second tertiary appearance identifier A_ID_2_3, corresponds to a second appearance metric, such as second tertiary appearance metric AM_2_3, of the second speaker being "age", a second tertiary appearance level AL_2_3 may be indicative of or correspond to an age range such as "younger than 20 years", "20-40 years", "40-60 years", or "older than 60 years" or an age label, such as "young", "mid-aged" or "old".

A second appearance metric AM_2_i may comprise a confidence score, also denoted ACS_2_i, i=1, 2, ..., G, where G is the number of confidence scores. In other words, determining a second appearance metric AM_2_i may comprise determining a second appearance confidence score ACS_2_i, e.g. determining a second primary appearance metric AM_2_1 may comprise determining a second primary appearance confidence score ACS_2_1. A second appearance confidence score ACS_2_i of an appearance metric AM_2_i may be indicative a score or a probability of the determined second appearance metric AM_2_i, such as second appearance level AL_2_i, being correct, e.g. the appearance metric or appearance level being correct. For example, ACS_2_1 = 0.95 may be indicative of a probability of 95% that a determined AL_2_1 being "male" is correct.

Determining one or more second appearance metrics indicative of a second speaker may comprise extracting one or more speaker appearance features from the second audio signal. The one or more speaker appearance features may for example comprise a speaker tone feature, a speaker intonation feature, a speaker power feature, a speaker pitch feature, a speaker voice quality feature, a speaker rate feature, a linguistic feature, an acoustic feature, and/or a speaker spectral band energy feature.

A spectral band energy feature may comprise individual bins of spectrograms indicating a signal energy level at a given frequency.

A linguistic feature may comprise specific appearance related words such as positive and/or negative words. The linguistic feature may be determined based on a text transcript of the audio signal. The text transcript may be obtained by human annotators or using an automatic speech recognition (speech to text) algorithm or service. The linguistic feature may comprise an embedding feature by a deep neural network (e.g. a BERT transformer network or other sequence-to-sequence autoencoders).

In one or more exemplary methods, the one or more second appearance metrics may be determined based on a machine learning, ML, model, such as an output of a ML model. The one or more second appearance metrics may be inferred by the ML model. A ML model may comprise a Linear Regression Model, a Support-Vector-Machine, a Decision Tree Classifier (e.g. Random Forest, XGBoost), a Gaussian Mixture Model, a Hidden Markov Model, and/or a Neural Network. A Neural Network may for example comprise one or more of a linear feed forward layer, a convolutional layer, a recurrent layer, and an attention layer. A ML model may comprise a weighting of one or more speaker features. For example, the ML model may map e.g. a speaker intonation and/or a voice quality to a sentiment metric/-type, a sentiment level, and/or a sentiment confidence score. A ML model may comprise parameters in the range of 100,000 parameters to 1,000,000 parameters, e.g. 500,000 to 1,000,000 parameters. A ML model may comprise layers in the range of 5 layers to 20 layers, e.g. 10 layers to 15 layers.

A ML model may be trained based on e.g. recording of calls, where a validator or supervisor, such as a human supervisor, have assigned sentiment identifiers/labels for a sentiment metric, and/or speaker feature labels for a speaker feature. A speaker feature may be determined algorithmically via signal processing algorithms. The one or more second appearance metrics may be inferred by the ML model. An input to the ML model may comprise audio data, such as audio data stored on a database of known audio data matching one or more appearance metrics, such as labels of appearance. A label of appearance may comprise a label assigned by a human and/or a ground truth, such as an age or a height from a passport or social registry. For example, the audio data input may comprise recording of calls, television shows, and/or movie actors or the like.

An input to the ML model may comprise one or more of an acoustic features, such as a tone feature. A tone feature may for example be a negative tone or a positive tone. Further an input to the ML model may comprise a spectrogram, a latent (hidden layer activations) representation of a (deep) neural network. An input to the ML model may comprise a static feature vector ("fingerprint"), such as a mean, a variance, a slope, peak distances, modulation spectra. An input to the ML model may comprise frame-wise (low-level) acoustic features such as a pitch of the voice, an energy level, spectral parameters (mel-frequency cepstrum, MFCC; e.g. log-MelSpec), spectral statistics (slope, roll-off-points), speech spectral envelope characteristics (e.g. formants, harmonics, ratios of harmonics and formants), and/or voice quality measures like harmonic to noise ratio, HNR, Jitter, and/or Shimmer. For example, an acoustic feature related to one or more appearance metrics, such as physical appearance, may comprise ratios of vowel formants which correlate with vocal tract length. For example, acoustic features may relate to one or more appearance metrics such as body size, voice quality features, e.g. HNR, Jitter and/or Shimmer which correlate with age (e.g. more breathiness, more Jitter for higher age), pitch may correlate with gender (e.g. males may have a pitch below 150 Hz and females may have a pitch above 150Hz). Further, acoustic features may for example comprise a phoneme inventory/histogram for language and dialect features, and/or average spectral envelope features e.g. for age and/or gender.

The one or more second sentiment metrics and the one or more second appearance metrics may be part of second speaker metric data. Second speaker metric data may also be denoted agent metric data and/or caller metric data.

In one or more exemplary methods, the method comprises determining a second speaker representation, also denoted SR_2, based on the second primary sentiment metric SM_2_1 and/or the second appearance metric AM_2_1.

The second speaker representation SR_2 may comprise a second primary speaker representation, also denoted SR_2_1. Determining SR_2_1 may comprise generating the second primary speaker representation SR_2_1 based on SM_2_1 and AM_2_1. The second speaker representation may be determined based on a public and/or a customer registration. For example, for a recurring caller/customer the second primary sentiment metric SM_2_1 and/or the second primary appearance metric AM_2_1 may be refined over multiple calls/conversations, e.g. the more a voice is heard, the audio data is obtained, and the more confidently it may be determined that the speaker is e.g. a male. One or more sentiment and/or appearance metrics may be known, e.g. an age from a social register and/or a sentiment state from a previous conversation. The one or more known sentiment and/or appearance metrics may be used to improve accuracy of the determination of the speaker representation and/or used to determine the speaker representation.

The second speaker representation SR_2 may comprise a second secondary speaker representation, also denoted SR_2_2. The second speaker representation SR_2 may comprise a second tertiary speaker representation, also denoted SR_2_3. The second speaker representation SR_2 may comprise a second quaternary speaker representation, also denoted SR_2_4. The second speaker representation SR_2 may comprise a second quinary speaker representation, also denoted SR_2_5. Thus, determining a second speaker representation may comprise determining one or more of SR_2_2, SR_2_3, SR_2_4, and SR_2_5 based on the second audio signal, such as based on the second primary sentiment metric SM_2_1 and/or the second primary appearance metric AM_2_1.

Determining a second speaker representation may comprise determining one or more of SR_2_2, SR_2_3, SR_2_4, and SR_2_5 based on the second audio signal, such as based on the second primary sentiment metric SM_2_1 and/or the second primary appearance metric AM_2_1.

The second speaker representation may also be denoted a second person representation.

The second speaker representation may be indicative of the second speaker state and/or the appearance of the second speaker in substantial real-time, e.g. with a delay less than 5 seconds, or less than 10 seconds. The second speaker representation may be indicative of a segment, such as a speech segment or utterance, which is analysed. For example, a voice activity detection module may identify one or more segments of speech/voice and discard the noise. A segment may for example be a speech segment of at least 5 seconds or at least 10 seconds. The voice activity detection module may detect pauses longer than e.g. 400 ms, 500 ms, or 1 second. A speech segment may be detected when a pause occurs, when another speaker starts speaking, or when a segment reaches a defined maximum length (e.g. at most 8 seconds) may indicate the end of the speech segment. For each speech segment one or more sentiment metrics and/or one or more appearance metrics may be determined. In one or more exemplary methods/systems, the second speaker representation, such as the second primary speaker representation, is updated with an update frequency of at least 0.2 Hz, e.g. every second, every 5 seconds, every 7 seconds, or every 10 seconds. The update frequency of the first primary speaker representation may be varied in time and may also depend on the conversation, such as conversation speed.

In other words, the second speaker representation, such as the second primary speaker representation, may be updated during the second speaker speaking and/or during a conversation, such as a telephone call, between the second speaker and second speaker. The second speaker representation may be indicative of or reflect a live, real-time, instant, and/or current sentiment and/or appearance of the second speaker. For example, the second speaker representation, such as the second primary speaker representation may be a real-time physical and emotional representation of the second speaker.

An advantage of having a real-time or substantially real-time second speaker representation may be that the user of the electronic device may see or be informed in real-time about changes in the sentiment and/or the second speaker appearance.

Furthermore, the user of the electronic device may better imagine or conceive the sentiment and/or the appearance of the second speaker by seeing the second speaker representation including the second primary speaker representation. In other words, the user may have the experience of having a video talk or video call without receiving video signals.

The second speaker representation may give real-time feedback to the user regarding the second speaker talking, e.g. feedback about second speaker traits, such as second speaker state and/or appearance of the second speaker. The second speaker representation may provide a realistic representation of the second speaker. The second speaker representation may provide a personification of the second speaker, a portrait of the second speaker, a shape of the second speaker, a sketch of the second speaker, and/or a gamification of the second speaker.

The second speaker representation may comprise sound representations, such as auditory feedback and/or audio icons.

In one or more exemplary methods, determining the second speaker representation $SR\_2$, such as determining a second primary speaker representation $SR\_2\_1$ of the second speaker representation $SR\_2$, comprises determining one or more second features $F\_2\_i$, i=1, ..., J, where J is the number of second features. The one or more second features may include a second primary feature also denoted $F\_2\_1$ and/or a second secondary feature also denoted $F\_2\_2$ of the second primary speaker representation $SR\_2\_1$. The number L of second features may be 2, 3, 4, 5, or more. The second primary speaker representation $S\_2\_1$ may be or comprise a second avatar, a second emoji, a second smiley, a second icon, a second image

In one or more exemplary methods, determining the second speaker representation $SR\_2$ comprises determining a second primary feature, also denoted $F\_2\_1$, and/or a second secondary feature, also denoted $F\_2\_2$, of a second avatar based on the second primary sentiment metric $SM\_2\_1$ and/or based on the second primary appearance metric $AM\_2\_1$. Optionally, the second speaker representation, such as a second primary speaker representation $SR\_2\_1$ of the second speaker representation $SR\_2$, comprises the second avatar. Determining $SR\_2$, such as determining $SR\_2\_1$, may comprise determining one or more features, such as second features, based on one or more sentiment metrics, such as second sentiment metrics. Determining $SR\_2$, such as determining $SR\_2\_1$, may comprise determining one or more features, such as second features, based on one or more sentiment metrics, such as second sentiment metrics and/or one or more appearance metrics. Determining $SR\_2$, such as determining $SR\_2\_1$, may comprise determining $F\_2\_1$ based on $SM\_2\_1$ and/or $AM\_2\_1$. In other words, the second speaker representation $SR\_2$, such as the second primary speaker representation $SR\_2\_1$, may be based on one or more second features, e.g. based on $F\_2\_1$ and $F\_2\_2$.

The second primary feature $F\_2\_1$ may be indicative of the second primary sentiment metric $SM\_2\_1$.

In other words, $F\_2\_1$ may be indicative of the primary sentiment state indicated by $SM\_2\_1$. For example, when the primary sentiment state indicated by $SM\_2\_1$ is negative, $F\_2\_1$ may be indicative of a negative feature, e.g. negative eyes or negative mouth.

$F\_2\_1$ may be selected from a list of features and/or a class of features. $F\_2\_1$ may be selected or chosen from a set of features, e.g. a set of feature types and a number or value may be assigned to each feature type of the set of feature types.

The second primary representation, such as the second avatar, may be indicative of the primary sentiment state of the second speaker. The second avatar may be a real-time physical and/or emotional representation of the second speaker. The second avatar may be a representation of a facial expression being indicative of the sentiment state of the speaker and/or the appearance of the second speaker. The term representation may be understood as one or more of an avatar, a smiley, an emoji, an emoticon, a portrait, a personification, a sketch, and a shape. The second primary representation, such as the second avatar, may be a sum of one or more second features representing one or more sentiments or sentiment states of the second speaker and/or one or more appearances of the second speaker. The second primary representation, such as the second avatar may at least comprise one feature, at least two features, at least five features, at least ten features.

In one or more exemplary methods, the method comprises outputting, via the interface of the electronic device, the second speaker representation $SR\_2$. Outputting the second speaker representation $SR\_1$ may comprise displaying a second user interface indicative of the second speaker representation.

A user interface may comprise one or more, such as a plurality of, user interface objects. For example, the second user interface may comprise one or more second user interface objects, such as a second primary user interface object and/or a second secondary user interface object. A user interface object may refer herein to a graphical representation of an object that is displayed on an interface of the electronic device, such as a display. The user interface object may be user-interactive, or selectable by a user input. For example, an image (e.g., icon), a button, and text (e.g., hyperlink) each optionally constituting a user interface object. The user interface object may form part of a widget. A widget may be seen as a mini-application that may be used by the user.

In one or more exemplary methods, the one or more second sentiment metrics $SM\_2\_i$ includes a second secondary sentiment metric also denoted $SM\_2\_2$, indicative of a secondary sentiment state of the second speaker. For the description of the second secondary sentiment metric $SM\_2\_2$ of the second speaker, it is referred back to the description of the first secondary sentiment metric $SM\_1\_2$ of the first speaker. The description of the secondary sentiment metric $SM\_2\_2$ is equivalent to the description of the first secondary sentiment metric SM_1_2 of the first speaker, but where the first secondary sentiment metric SM_1_2 is replaced with the second secondary sentiment metric SM_2_2.

In one or more exemplary methods, the one or more second appearance metrics AM_2_i includes a second secondary appearance metric also denoted AM_2_2, indicative of a secondary appearance of the second speaker. For the description of the second secondary appearance metric AM_2_2 of the second speaker, it is referred back to the description of the first secondary appearance metric AM_1_2 of the first speaker. The description of the secondary appearance metric AM_2_2 is equivalent to the description of the first secondary appearance metric AM_1_2 of the first speaker, but where the first secondary appearance metric AM_1_2 is replaced with the second secondary appearance metric AM_2_2.

In one or more exemplary methods, the second speaker representation is an agent representation. The agent representation may be a representation of an agent answering calls at a call center, such as a support call center.

In one or more exemplary methods, the method comprises detecting a termination of speech. Detecting a termination of speech may comprise detecting a termination of the first speaker and/or the second speaker talking or speaking. A termination of speech may for example be a termination of a conversation, a termination of a sentence, or a termination of a monologue.

In one or more exemplary methods, the method comprises, in accordance with detecting the termination of speech, storing a speaker record in the memory and/or transmitting a speaker record to a server device of the system. In one or more exemplary methods, the speaker record comprises a first speaker record indicative of one or more of first appearance metric data and first sentiment metric data of the first speaker.

An electronic device is disclosed. The electronic device comprises a processor, a memory, and an interface. The processor is configured to perform any of the methods according to this disclosure.

An electronic device is disclosed. The electronic device comprising a processor, a memory, and an interface. The processor is configured to obtain one or more audio signals including a first audio signal.

The electronic device may for example comprise one or more of a mobile phone, a computer, and a tablet. The electronic device may for example be a user device, such as a mobile phone or a computer, configured to perform a call between a user and another person. The electronic device may be configured to obtain first audio input, such as first audio input from the call between the user and another person. For example, the electronic device may act as call agent device where the user may be an agent, such as an agent of a call center, such as a support call center, an after sales call center, a marketing call center, or a sales call center. The electronic device may for example be a user device, such as a mobile phone or a computer, configured to record first audio input from a first speaker, such as record the first speaker speaking or talking. The electronic device may be configured to obtain one or more audio signals, such as generate one or more audio signals, including a first audio signal. The first audio signal may be based on the first audio input.

The processor is configured to determine one or more first sentiment metrics indicative of a first speaker state based on the first audio signal. The one or more first sentiment metrics include a first primary sentiment metric indicative of a primary sentiment state of the first speaker. The processor is configured to determine one or more first appearance metrics indicative of an appearance of the first speaker. The one or more first appearance metrics including a first primary appearance metric indicative of a primary appearance of the first speaker. The processor is configured to determine a first speaker representation based on the first primary sentiment metric and the first primary appearance metric. The processor is configured to output, via the interface, the first speaker representation.

The interface of the electronic device may comprise a first display. Optionally, the system may comprise a second interface, such as a second display (e.g. a sidewing), being separate from the electronic device. The second interface may act as a display instead of the interface of the electronic device. The first display of the electronic device may be configured to detect a user input, such as a first primary user input. The user input may comprise a touch input from the user, for example when the first display comprises a touch-sensitive display. The user input may comprise a contact on the touch sensitive display and/or a keyboard comprised in or connected to the electronic device. A touch-sensitive display may provide a first user interface and/or a second user interface (such as an input interface) and an output interface between the electronic device and the user. The processor of the electronic device may be configured to receive and/or send electrical signals from/to touch-sensitive display. A touch-sensitive display may be configured to display visual output to the user, e.g. the first speaker representation and/or the second speaker representation. The visual output optionally includes graphics, text, icons, video, audio icons, and any combination thereof (collectively termed "graphics"). For example, some, most, or all of the visual output may be seen as corresponding to user-interface objects. The electronic device may also be configured to output first speaker representations comprising audio output, such as sound representations, audio icons, and/or auditory feedback.

The processor of the electronic device may be configured to display, on the interface, e.g. first display, one or more user interfaces, such as user interface screens, including a first user interface and/or a second user interface. A user interface may comprise one or more, such as a plurality of user interface objects. For example, the first user interface may comprise a first primary user interface object and/or a first secondary user interface object. A second user interface may comprise a second primary user interface object and/or a second secondary user interface object. A user interface may be referred to as a user interface screen.

An input, such as the user input, may comprise a touch (e.g. a tap, a force touch, a long press), a click (such as a mouse click), a typing (such as a typing on a keyboard), an audio input (such as a voice assistant), and/or a movement of contact (e.g. a swipe gesture, e.g. for toggling). The movement on contact may be detected by a touch sensitive surface, e.g. on the first display of the electronic device. Thus, the first display may be a touch sensitive display. The first input (such as first user input) may comprise a lift-off. A user input, such as the first primary user input, the second primary user input and/or the second secondary user input, may comprise a touch and a movement followed by a lift off.

A system is disclosed. The system comprises a server device and an electronic device. The electronic device is an electronic device according to this disclosure.

The system may be a system for monitoring, handling, and/or analysing one or more audio signals, such as a speaker talking, e.g. as a monologue. The system may be a system for monitoring, handling, and/or analysing one or more audio signals, such as a conversation, e.g. between two or more people, such as a conversation in a phone call or a meeting. The system may for example comprise or act as a call center system for monitoring, handling, and/or analysing one or more audio signals, such as conversations between two or more people, e.g. a phone call between an agent of the call center system and a customer or caller.

**It** is to be understood that a description of a feature in relation to method(s) is also applicable to the corresponding feature in electronic device, server device, electronic circuit/audio device.

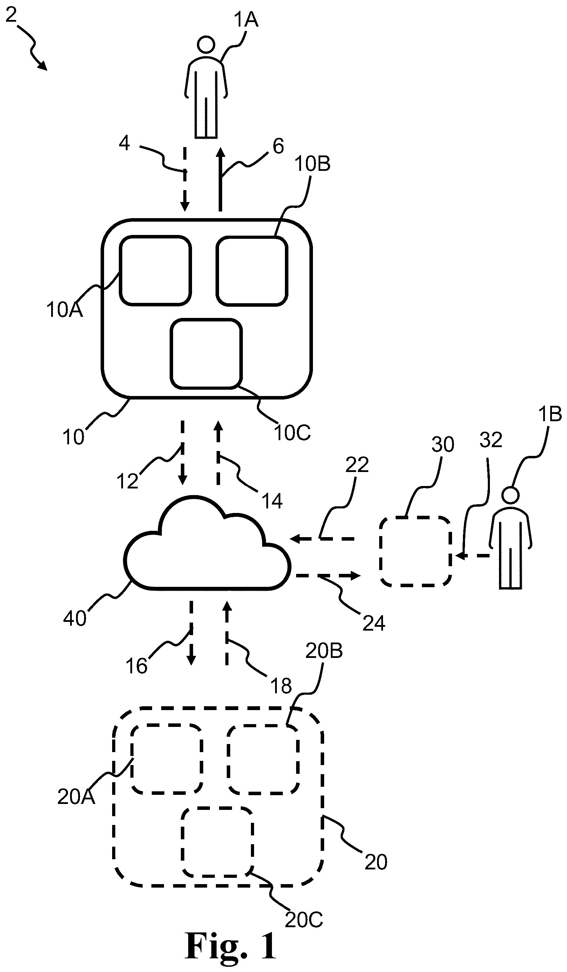

Fig. 1 schematically illustrates an exemplary system, such as system 2, with speaker representation according to the present disclosure. The system 2 comprises an electronic device 10 and optionally a server device 20. The electronic device 10 comprises a memory 10A, one or more interfaces 10B, and a processor 10C. The server device 20 comprises a memory 20A, one or more interfaces 20B, and one or more processors 20C. A user 1A may use the electronic device 10, e.g. being a mobile phone or a computer, for performing or receiving a call from a speaker 1B, e.g. a first speaker. The speaker 1B may use a speaker electronic device 30 for communicating with the user 1A.

The electronic device 10 may be configured to act as a user device that the user 1A may use for communicating and/or monitoring a call/conversation with the speaker 1B. The electronic device/processor 10C is configured to obtain 14 one or more audio signals including a first audio signal. The first audio signal may be obtained 22 from the speaker electronic device 30, e.g. via a network 40 such as a global network, e.g. the internet or a telecommunications network. The first audio signal may be obtained 14 from the server device 20, e.g. via the network 40 such as a global network, e.g. the internet or a telecommunications network.

The speaker electronic device 30 may be configured to record audio input 32, such as first audio input, from the speaker 1B, such as record the speaker 1B speaking or talking. The speaker electronic device 30 may be configured to obtain one or more audio signals, such as generate one or more audio signals based on the audio input 32, including a first audio signal based on the first audio input. The speaker electronic device 30 may be configured to transmit 22 the first audio signal to the electronic device 10, e.g. via the network 40. The speaker electronic device 30 may be configured to obtain 24 one or more audio signals from the electronic device 10, e.g. based on user input 4, such as user audio input. The user input 4 may be the user 1A speaking or talking, e.g. the electronic device 10 recording the user 1A speaking or talking. The user 1A may be the first speaker and/or a second speaker.

The electronic device/processor 10C is configured to determine one or more first sentiment metrics indicative of a first speaker state based on the first audio signal. The one or more first sentiment metrics include a first primary sentiment metric indicative of a primary sentiment state of the first speaker 1B.

Optionally, the one or more processors 20C is configured to determine one or more first sentiment metrics indicative of a first speaker state based on the first audio signal. The processor 10C may then be configured to obtain 14 the one or more sentiment metrics, indicative of the first speaker state based on the first audio signal, from the server device 20, e.g. via the network 40. The processor 20C may be configured to transmit 18 the one or more sentiment metrics to the electronic device 10, e.g. via the network 40.

The processor 10C is optionally configured to determine one or more first appearance metrics indicative of an appearance of the first speaker 1B. The one or more first appearance metrics include a first primary appearance metric indicative of a primary appearance of the speaker 1B.

Optionally, the processor 20C is configured to determine the one or more first appearance metrics indicative of an appearance of the speaker 1B. The processor 10C may then be configured to obtain 14 the one or more appearance metrics, indicative of the appearance of the speaker 1B, from the server device 20, e.g. via the network 40. The processor 20C may be configured to transmit 18 the one or more appearance metrics to the electronic device 10, e.g. via the network 40.

The processor 10C is configured to determine a first speaker representation based on the first primary sentiment metric and the first primary appearance metric.

Optionally, the processor 20C is configured to determine the first speaker representation based on the first primary sentiment metric and the first primary appearance metric. The processor 10C may then be configured to obtain 14 the first speaker representation from the server device 20, e.g. via the network 40. The processor 20C may be configured to transmit 18 the first speaker representation/second speaker representation, to the electronic device 10, e.g. via the network 40.

The processor 10C is configured to output 6, e.g. via the interface 10B, the first speaker representation.

The processor 10C may be configured to detect a termination of speech, such as a termination, an end, or a hold of a call, and in accordance with the detection of the termination of speech/call, to store a speaker record in the memory 10A and/or transmit a speaker record to the server device 20. The speaker record is indicative of, comprises, and/or is based on one or more sentiment metrics and/or appearance metrics determined during the speech. The processor 10C may in accordance with the detection of the termination of speech, be configured to transmit 12 a speaker record to the server device 20 of the system 2, e.g. via the network 40. The speaker record may comprise a first speaker record indicative of one or more of first appearance metric data and first sentiment metric data of the first speaker 1B.

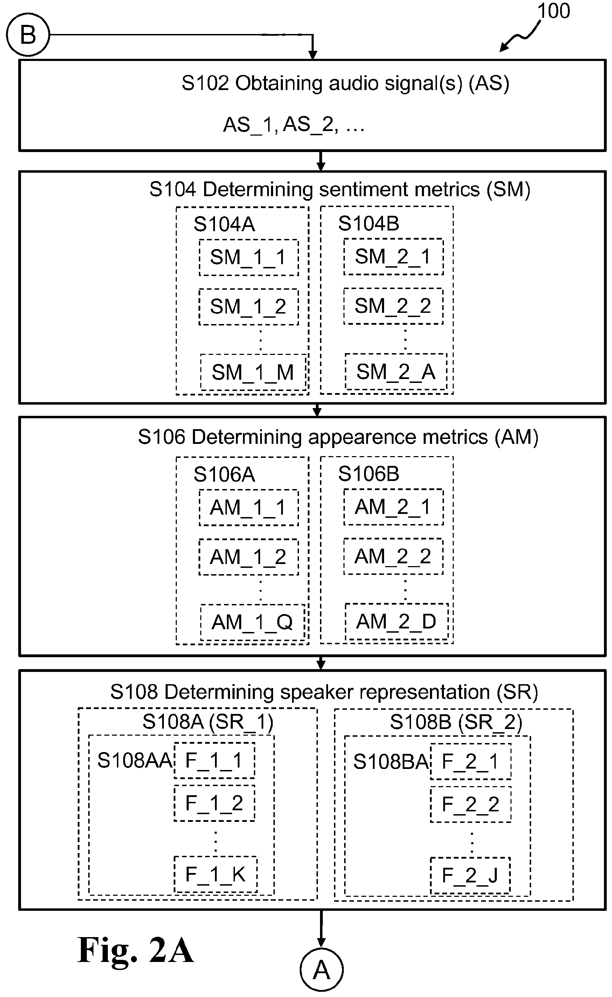

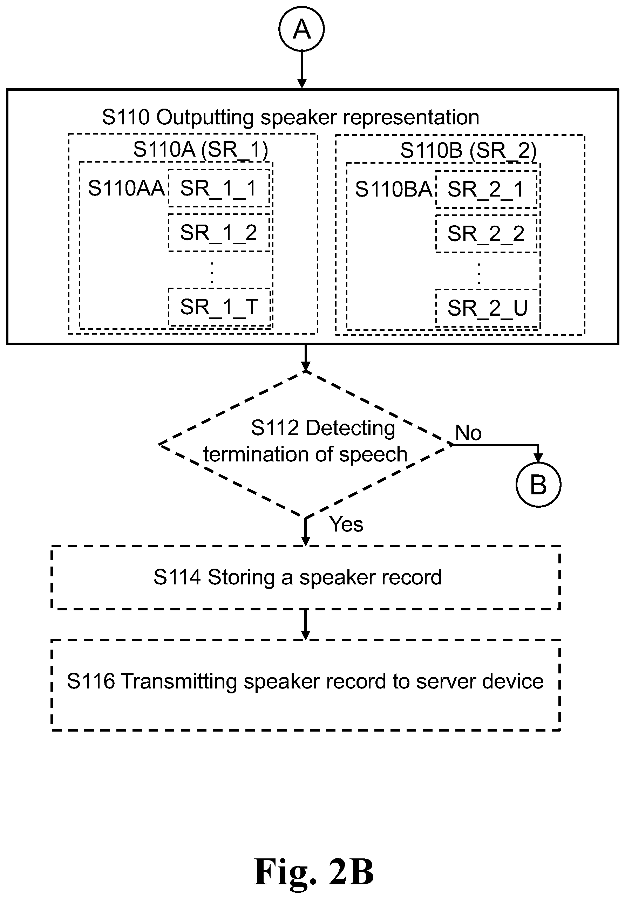

The electronic device 10 may be configured to perform any of the methods disclosed in Figs. 2A, 2B.

The processor 10C is optionally configured to perform any of the operations disclosed in Figs. 2A-2B (such as any one or more of S104A, S104B, S106A, S106B, S108A, S108A, S108AA, S108BA, S110A, S110B, S110AA, S110BA, S112, S114, S116). The operations of the electronic device may be embodied in the form of executable logic routines (for example, lines of code, software programs, etc.) that are stored on a non-transitory computer readable medium (for example, memory 10A) and are executed by the processor 10C).

The processor 20C is optionally configured to perform any of the operations disclosed in Figs. 2A-2B (such as any one or more of S104A, S104B, S106A, S106B, S108A, S108A, S108AA, S108BA, S110A, S110B, S110AA, S110BA, S112, S114, S116). The operations of the server device may be embodied in the form of executable logic routines (for example, lines of code, software programs, etc.) that are stored on a non-transitory computer readable medium (for example, memory 20A) and are executed by the processor 20C).

Furthermore, the operations of the electronic device 10 may be considered a method that the electronic device 10 is configured to carry out. Also, while the described functions and operations may be implemented in software, such functionality may as well be carried out via dedicated hardware or firmware, or some combination of hardware, firmware and/or software.

Figs. 2A and 2B show a flow diagram of an exemplary method. A method 100 of operating a system comprising an electronic device is disclosed. The electronic device comprises an interface, a processor, and a memory. The method 100 comprises obtaining S102 one or more audio signals including a first audio signal AS_1 and optionally a second audio signal AS_2. The method 100 comprises determining S104 one or more sentiment metrics indicative of a speaker state based on one or more audio signal. Determining S104 one or more sentiment metrics may comprise determining S104A one or more first sentiment metrics including a first primary sentiment metric indicative of a primary sentiment state of a first speaker, e.g. based on AS_1 and/or AS_2. Determining S104 one or more sentiment metrics may comprise determining S104B one or more second sentiment metrics including a second primary sentiment metric indicative of a primary sentiment state of a second speaker, e.g. based on AS_1 and/or AS_2.

The method 100 comprises determining S106 one or more appearance metrics indicative of an appearance of a speaker. Determining S106 one or more appearance metrics may comprise determining S106A one or more first appearance metrics including a first primary appearance metric indicative of a primary appearance of a first speaker, e.g. based on AS_1 and/or AS_2. Determining S106 one or more appearance metrics may comprise determining S106B one or more second appearance metrics including a second primary appearance metric indicative of a primary appearance of a second speaker, e.g. based on AS_1 and/or AS_2.

The method 100 comprises determining S108 a speaker representation based on the one or more sentiment metrics and the one or more appearance metrics. Determining S108 a speaker representation may comprise determining S108A a first speaker representation based on the first primary sentiment metric and/or the first primary appearance metric.

Determining S108A a first speaker representation may comprise determining S108AA one or more first features of a first avatar. Determining S108AA one or more first features of a first avatar may comprise determining a first primary feature of the first avatar.

Determining S108 a speaker representation may comprise determining S108B a second speaker representation based on the second primary sentiment metric and the second primary appearance metric.

Determining S108B a second speaker representation may comprise determining S108BA one or more second features of a second avatar. Determining S108BA one or more second features of a second avatar may comprise determining a second primary feature of the second avatar.

The method 100 comprises outputting S110 via the interface of the electronic device, one or more speaker representations. Outputting S110 one or more speaker representations may comprise outputting S110A a first speaker representation, e.g. comprising a first avatar.

Outputting S110A a first speaker representation may comprise outputting S110AA a first primary speaker representation, e.g. comprising a first primary avatar.

Outputting S110 one or more speaker representations may comprise outputting S110B a second speaker representation, e.g. comprising a second avatar.

Outputting S110B a second speaker representation may comprise outputting S110BA a second primary speaker representation, e.g. comprising a second primary avatar.

In one or more exemplary methods, the method 100 comprises detecting S112 a termination of speech, such as termination, end, or hold of a call.

In one or more exemplary methods, in accordance with detecting S112 the termination of speech, the method comprises storing S114 a speaker record in the memory.

In one or more exemplary methods, in accordance with detecting S112 the termination of speech, the method comprises transmitting S116 a speaker record to a server device of the system. The speaker record comprises a first speaker record indicative of one or more of first appearance metric data and first sentiment metric data of the first speaker.

In one or more exemplary methods, when termination of speech is not detected, the method comprises reiterating/restarting B the method 100, e.g. at a frequency of at least 0.2 Hz, e.g. every second, every 5 seconds, every 7 seconds, or every 10 seconds, e.g. where no pause has been detected. The update frequency of the first primary speaker representation may be varied in time and may also depend on the conversation, such as conversation speed.

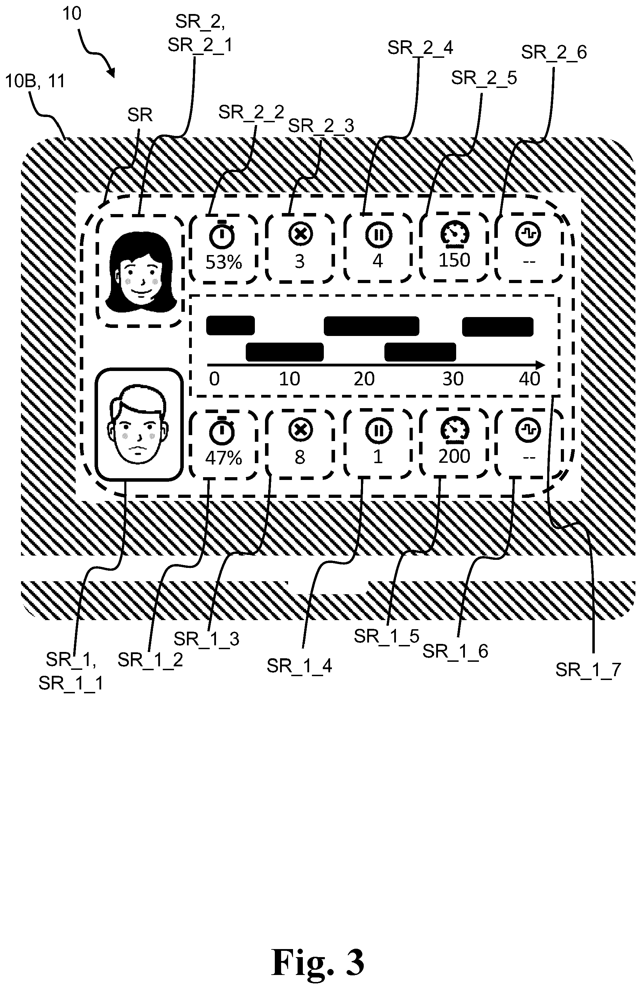

Fig. 3 schematically illustrates an exemplary electronic device, such as electronic device 10, according to the present disclosure. The electronic device 10 is in this example a laptop computer. The electronic device 10 is configured to display on an interface 10B of the electronic device, e.g. on a display 11 of the laptop computer, a user interface comprising a speaker representation SR. The user interface comprises a plurality of user interface objects. The electronic device 10 displays a first speaker representation as a first user interface object SR_1, e.g. having a first display region. The first speaker representation SR_1 comprises a first primary speaker representation SR_1_1, e.g. arranged in the first display region.

The first primary speaker representation is based on a first audio signal, e.g. based on a determined first primary sentiment metric SM_1_1 and/or a determined first primary appearance metric AM_1_1 of a first speaker. Determining the first primary speaker representation SR_1_1 is based on determining the first primary sentiment metric SM_1_1 indicative of a first speaker state, e.g. selecting the first sentiment metric out of five different of sentiment metrics to be indicative of the first speaker state being negative. Determining the first primary speaker representation SR_1_1 is based on determining the first primary appearance metric AM_1_1 indicative of a primary appearance of the first speaker, e.g. selecting the first primary appearance metric out of two different appearance metrics to be indicative of the primary appearance being of the gender male. Thus, determining the first primary speaker representation SR_1_1 as being a negative male, e.g. determining a first avatar being a negative male. Determining the first primary speaker representation may comprise determining a first primary feature of the first avatar based on the first primary sentiment metric. For example, the first primary sentiment metric being negative, the first primary feature, e.g. being an eye feature, may be selected out of five different type of eyes to be negative male eyes. For example, the first primary sentiment metric being negative, a first secondary feature, e.g. being a mouth feature, may be selected out four different type of mouths to be negative male mouth.

The second primary speaker representation is based on a second audio signal, e.g. based on a determined second primary sentiment metric SM_2_1 and/or a determined second primary appearance metric AM_2_1 of a second speaker. Determining the second primary speaker representation SR_2_1 is based on determining the second primary sentiment metric SM_2_1 indicative of a second speaker state, e.g. selecting the second sentiment metric out of four different of sentiment metrics to be indicative of the second speaker state being positive. Determining the second primary speaker representation SR_2_1 is based on determining the second primary appearance metric AM_2_1 indicative of a primary appearance of the second speaker, e.g. selecting the second primary appearance metric out of two different appearance metrics to be indicative of the primary appearance being of the gender female. Thus, determining the second primary speaker representation SR_2_1 as being a positive female, e.g. determining a second avatar being a positive female. Determining the second primary speaker representation may comprise determining a second primary feature of the second avatar based on the second primary sentiment metric. For example, the second primary sentiment metric being positive, the second primary feature, e.g. being an eye feature, may be selected out of five different type of eyes to be positive female eyes. For example, the second primary sentiment metric being positive, a second secondary feature, e.g. being a mouth feature, may be selected out four different type of mouths to be positive female mouth, e.g. a smiling avatar.

The electronic device 10 displays a first secondary speaker representation as a first secondary user interface object SR_1_2, e.g. having a first secondary display region. The first speaker representation SR_1 may comprise a first secondary speaker representation SR_1_2, e.g. arranged in the first secondary display region. The first secondary speaker representation may be indicative of a talk ratio between the first speaker and the second speaker. The first secondary speaker representation may be based on the first audio signal and the second audio signal. The first secondary speaker representation may be determined as a comparison between the first audio signal and the second audio signal. The second speaker representation SR_2 may comprise a similar second secondary speaker representation SR_2_2.

The electronic device 10 displays a first tertiary speaker representation as a first tertiary user interface object SR_1_3, e.g. having a first tertiary display region. The first speaker representation SR_1 may comprise a first tertiary speaker representation SR_1_3, e.g. arranged in the first tertiary display region. The first tertiary speaker representation may be indicative of interruptions and overtalks between the first speaker and the second speaker. The first tertiary speaker representation may be based on the first audio signal and the second audio signal. The first tertiary speaker representation may be determined as a comparison between the first audio signal and the second audio signal. The second speaker representation SR_2 may comprise a similar second tertiary speaker representation SR_2_3.

The electronic device 10 displays a first quaternary speaker representation as a first quaternary user interface object SR_1_4, e.g. having a first quaternary display region. The first speaker representation SR_1 may comprise a first quaternary speaker representation SR_1_4, e.g. arranged in the first quaternary display region. The first quaternary speaker representation may be indicative of long pauses of the first speaker. The first quaternary speaker representation may be based on the first audio signal. The second speaker representation SR_2 may comprise a similar second quaternary speaker representation SR_2_4.

The electronic device 10 displays a first quinary speaker representation as a first quinary user interface object SR_1_5, e.g. having a first quinary display region. The first speaker representation SR_1 may comprise a first quinary speaker representation SR_1_5, e.g. arranged in the first quinary display region. The first quinary speaker representation may be indicative of speech rate of the first speaker. The first quinary speaker representation may be based on the first audio signal. The second speaker representation SR_2 may comprise a similar second quinary speaker representation SR_2_5.

The electronic device 10 displays a first senary speaker representation as a first senary user interface object SR_1_6, e.g. having a first senary display region. The first speaker representation SR_1 may comprise a first senary speaker representation SR_1_6, e.g. arranged in the first senary display region. The first senary speaker representation may be indicative of intonation of the first speaker. The first senary speaker representation may be based on the first audio signal. The second speaker representation SR_2 may comprise a similar second senary speaker representation SR_2_6.

The electronic device 10 displays a first septenary speaker representation as a first septenary user interface object SR_1_7, e.g. having a first septenary display region. The first speaker representation SR_1 may comprise a first septenary speaker representation SR_1_7, e.g. arranged in the first septenary display region. The first septenary speaker representation may be indicative of a timeline of a conversation between the first speaker and the second speaker. The timeline may also indicate speech segments of the first speaker and the second speaker. The first septenary speaker representation may be based on the first audio signal and the second audio signal.

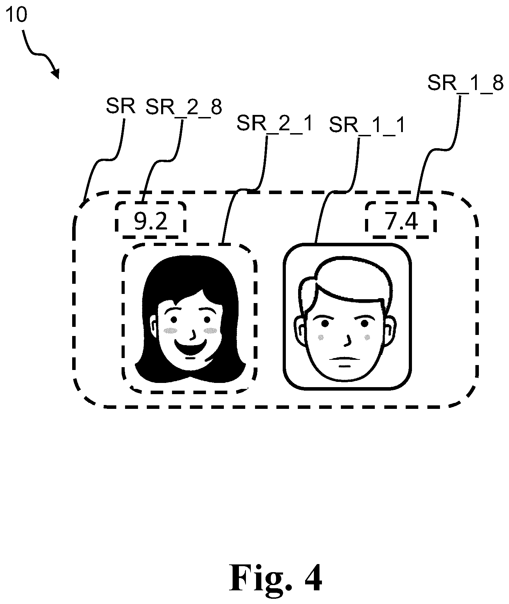

Fig. 4 schematically illustrates an exemplary user interface comprising a speaker representation SR. The user interface comprises a plurality of user interface objects. The speaker representation SR comprises a first primary speaker representation SR_1_1.

The first primary speaker representation is based on a first audio signal, e.g. based on a determined first primary sentiment metric SM_1_1 and/or a determined first primary appearance metric AM_1_1 of a first speaker. Determining the first primary speaker representation SR_1_1 is based on determining the first primary sentiment metric SM_1_1 indicative of a first speaker state, e.g. selecting the first sentiment metric out of four different of sentiment metrics to be indicative of the first speaker state being neutral. Determining the first primary speaker representation SR_1_1 is based on determining the first primary appearance metric AM_1_1 indicative of a primary appearance of the first speaker, e.g. selecting the first primary appearance metric out of two different appearance metrics to be indicative of the primary appearance being of the gender male. Thus, determining the first primary speaker representation SR_1_1 as being a neutral male, e.g. determining a first avatar being a neutral male. Determining the first primary speaker representation may comprise determining a first primary feature of the first avatar based on the first primary sentiment metric. For example, the first primary sentiment metric being neutral, the first primary feature, e.g. being an eye feature, may be selected out of five different type of eyes to be neutral male eyes. For example, the first primary sentiment metric being neutral, a first secondary feature, e.g. being a mouth feature, may be selected out four different type of mouths to be neutral male mouth.

The speaker representation SR may comprise a first octonary speaker representation SR_1_8. The first octonary speaker representation may be indicative of a first primary sentiment level SL_1_1 of the first primary sentiment metric SM_1_1. The first primary sentiment level is selected from 1 to 10, to be 7.4. Thus, the first primary sentiment metric SM_1_1 being neutral, the first primary sentiment level is 7.4 neutral.

The speaker representation SR may comprise a second primary speaker representation SR_1_1. The second primary speaker representation is based on a second audio signal, e.g. based on a determined second primary sentiment metric SM_2_1 and/or a determined second primary appearance metric AM_2_1 of a second speaker. Determining the second primary speaker representation SR_2_1 is based on determining the second primary sentiment metric SM_2_1 indicative of a second speaker state, e.g. selecting the second sentiment metric out of four different of sentiment metrics to be indicative of the second speaker state being very positive. Determining the second primary speaker representation SR_2_1 is based on determining the second primary appearance metric AM_2_1 indicative of a primary appearance of the second speaker, e.g. selecting the second primary appearance metric out of two different appearance metrics to be indicative of the primary appearance being of the gender female. Thus, determining the second primary speaker representation SR_2_1 as being a very positive female, e.g. determining a second avatar being a very positive female. Determining the second primary speaker representation may comprise determining a second primary feature of the second avatar based on the second primary sentiment metric. For example, the second primary sentiment metric being very positive, the second primary feature, e.g. being an eye feature, may be selected out of five different type of eyes to be very positive female eyes. For example, the second primary sentiment metric being very positive, a second secondary feature, e.g. being a mouth feature, may be selected out four different type of mouths to be very positive female mouth.

The speaker representation SR may comprise a second octonary speaker representation SR_2_8. The second octonary speaker representation may be indicative of a second primary sentiment level SL_2_1 of the second primary sentiment metric SM_2_1. The second primary sentiment level is selected from 1 to 10, to be 9.2. Thus, the second primary sentiment metric SM_2_1 being very positive, the second primary sentiment level is 9.2 very positive.

The speaker representations SR_1, SR_1_1, SR_2, SR_2_1 are exemplified in Fig. 3 and Fig. 4 with representations from "www.iconfinder.com/UsersInsights".

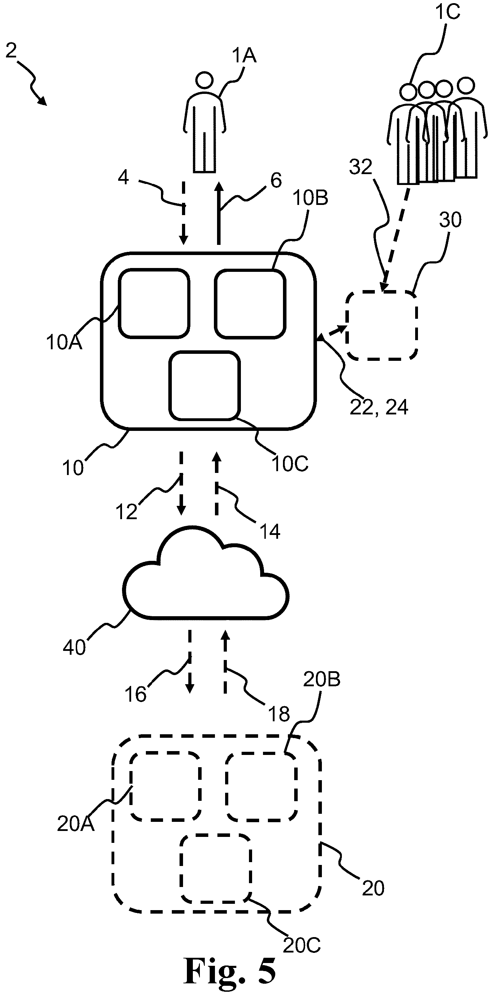

Fig. 5 schematically illustrates an exemplary system, such as system 2, with speaker representation according to the present disclosure. The system 2 is similar to the system shown in Fig. 1, but where the user 1A and a speaker or group of speakers 1C are collocated, e.g. in the same room or the same place. The user 1A and speaker(s) 1C may conduct a meeting, e.g. a conference, a physical meeting or a job interview. The electronic device 10, such as the interface 10B, may comprise or be connected to a microphone via which the user 1A and/or the speaker(s) 1C may speak into to provide an audio input 32.

Optionally, a speaker electronic device 30 may comprise a microphone that the speaker(s) 1C may speak into to provide an audio input 32. The speaker electronic device 30 may be connected locally to the electronic device 10, e.g. via the interface 10B. The connection may be a wire connection or a wireless connection, such as Bluetooth or the like. The speaker electronic device 30 may transmit 22 one or more audio signals, including the first audio signal, to the electronic device 10 via the connection, e.g. the interface 10B. The speaker electronic device 30 may obtain/receive 24 one or more audio signals from the electronic device 10 via the connection.

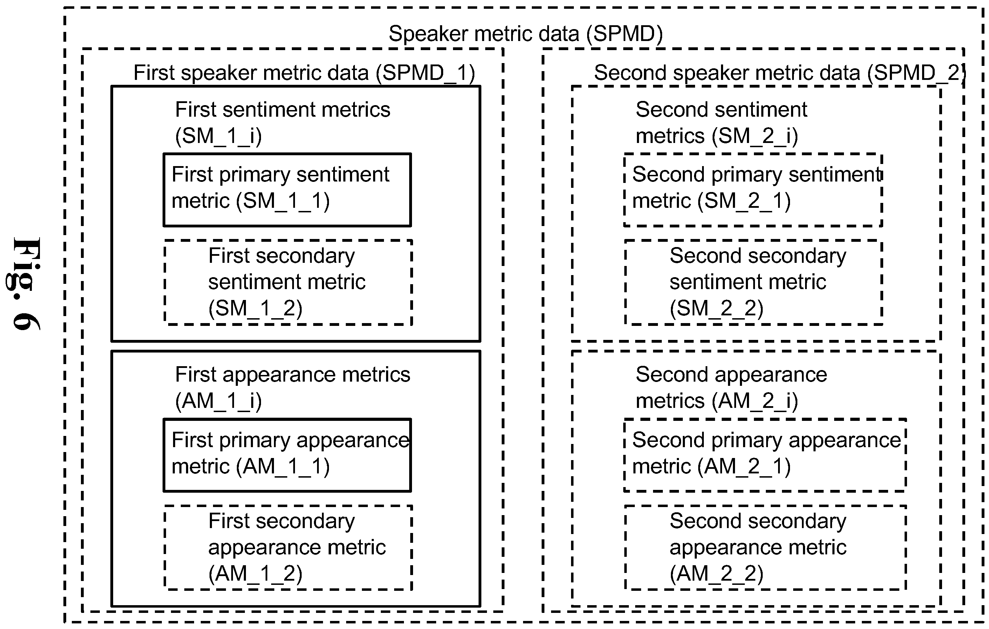

Fig. 6. schematically illustrates an exemplary data structure according to the present disclosure. The speaker metric data SPMD may comprise first speaker metric data SPMD_1. The first speaker metric data SPMD_1 comprises first sentiment metrics SM_1_i. The first sentiment metrics SM_1_i comprises first primary sentiment metric SM_1_1, and optionally first secondary sentiment metric SM_1_2. The first speaker metric data SPMD_1 comprises first appearance metrics AM_1_i. The first appearance metrics AM_1_i comprises first primary appearance metric AM_1_1, and optionally first secondary appearance metric AM_1_2.

The speaker metric data SPMD may optionally comprise second speaker metric data SPMD_2. The second speaker metric data SPMD_2 may comprise second sentiment metrics SM_2_i. The second sentiment metrics SM_2_i may comprise second primary sentiment metric SM_2_1, and optionally second secondary sentiment metric SM_2_2. The second speaker metric data SPMD_2 may comprise second appearance metrics AM_2_i. The second appearance metrics AM_2_i may comprise second primary appearance metric AM_2_1, and optionally second secondary appearance metric AM_2_2.

The use of the terms "first", "second", "third" and "fourth", "primary", "secondary", "tertiary" etc. does not imply any particular order, but are included to identify individual elements.

Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Memory may be one or more of a buffer, a flash memory, a hard drive, a removable media, a volatile memory, a non-volatile memory, a random access memory (RAM), or other suitable device. In a typical arrangement, memory may include a non-volatile memory for long term data storage and a volatile memory that functions as system memory for the processor. Memory may exchange data with processor over a data bus. Memory may be considered a non-transitory computer readable medium.

Memory may be configured to store information (such as information indicative of the one or more audio signals, the one or more sentiment metrics, the one or more appearance metrics, the speaker representations, the sentiment metric data, and/or the appearance metric data) in a part of the memory.

Furthermore, the labelling of a first element does not imply the presence of a second element and vice versa.

It may be appreciated that Figs. 1-6 comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The exemplary operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

The various exemplary methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

The specification and drawings are, accordingly to be regarded in an illustrative rather than restrictive sense.

LIST OF REFERENCES

1A user, second speaker
1B speaker, first speaker, caller
1C speaker(s), group of speakers,
2 system
4 user input
6 speaker representation, user output
10 electronic device
10A memory
10B one or more interfaces
10C processor
12 transmit
14 obtain
16 obtain
18 transmit
20 server device
20A memory
20B interface
20C one or more processors
22 transmit
24 obtain
30 speaker electronic device
32 speaker input, audio input
40 network
AS audio signal
AS_1 first audio signal
AS_2 first audio signal
A_ID appearance identifier
A_ID_1 first appearance identifier
A_ID_1_1 first primary appearance identifier
A_ID_1_2 first secondary appearance identifier
A_ID_1_3 first tertiary appearance identifier
A_ID_2_1 second primary appearance identifier
A_ID_2_2 second secondary appearance identifier
A_ID_2_3 second tertiary appearance identifier
A_ID_SET set of appearance identifiers
A_ID_SET_1 primary set of appearance identifiers
A_ID_SET_2 secondary set of appearance identifiers
ACS appearance confidence score
ACS_1 first appearance confidence score
ACS_1_1 first primary appearance confidence score
ACS_1_2 first secondary appearance confidence score
ACS_2 second appearance confidence score
ACS_2_1 second primary appearance confidence score
AL appearance level
AL_1 first appearance level
AL_1_1 first primary appearance level
AL_1_2 first secondary appearance level
AL_1_3 first tertiary appearance level
AL_2_1 second primary appearance level
AL_2_2 second secondary appearance level
AL_2_3 second tertiary appearance level

AM appearance metric
AM_1_1 first primary appearance metric
AM_1_2 first secondary appearance metric
AM_2_1 secondary primary appearance metric
AM_2_2 second secondary appearance metric
F_1 first feature
F_1_1 first primary feature
F_1_2 first secondary feature
F_2 second feature
F_2_1 second primary feature
F_2_2 second secondary feature
F_ID feature identifier
F_ID_1 feature type identifier
F_ID_1_1 first primary feature identifier
F_ID_1_2 first secondary feature identifier
FL feature level
FL_1_1 first primary feature level
FL_1_2 first secondary feature level
PCR post-conversation representation
PCR_1 first post-conversation representation
SCS confidence score
SCS_1 first confidence score
SCS_1_1 first primary confidence score
SCS_1_2 first secondary confidence score
SCS_2_1 second primary confidence score
SL sentiment level
SL_1_1 first primary sentiment level
SL_1_2 first secondary sentiment level
SL_2_1 second primary sentiment level
SM sentiment metrics
SM_1 first sentiment metric
SM_1_1 first primary sentiment metric
SM_1_2 first secondary sentiment metric
SM_2 second sentiment metric
SM_2_1 second primary sentiment metric
SM_2_2 second secondary sentiment metric
ST_ID_1_1 first primary sentiment type identifier
ST_ID_1_2 first secondary sentiment type identifier
ST_ID_2_1 second primary sentiment type identifier
ST_ID_2_2 second secondary sentiment type identifier
ST_ID_SET_1 primary set of sentiment type identifiers
ST_ID_SET_2 secondary set of sentiment type identifiers
SPMD speaker metric data
SPMD_1 first speaker metric data
SPMD_1_1 first primary speaker metric data
SPMD_1_2 first secondary speaker metric data
SPMD_1_3 first tertiary speaker metric data
SPMD_2 second speaker metric data
SPMD_2_1 second primary speaker metric data
SR speaker representation
SR_1 first speaker representation
SR_1_1 first primary speaker representation
SR_1_2 first secondary speaker representation
SR_1_3 first tertiary speaker representation
SR_1_4 first quaternary speaker representation

SR_1_5 first quinary speaker representation
SR_1_6 first senary speaker representation
SR_1_7 first septenary speaker representation
SR_1_8 first octonary speaker representation
SR_2 second speaker representation
SR_2_1 second primary speaker representation
SR_2_2 second secondary speaker representation
SR_2_3 second tertiary speaker representation
SR_2_4 second quaternary speaker representation
SR_2_5 second quinary speaker representation
SR_2_6 second senary speaker representation
SR_2_7 second septenary speaker representation
100 method of operating a system comprising an electronic device
S102 obtaining audio signals
S104 determining sentiment metrics
S104A determining first sentiment metrics
S104B determining second sentiment metrics
S106 determining appearance metrics
S106A determining first appearance metrics
S106B determining second appearance metrics
S108 determining speaker representation
S108A determining first speaker representation
S108B determining second speaker representation
S110 outputting speaker representation
S110A outputting first speaker representation
S110B outputting second speaker representation
S112 detecting a termination of speech
S114 storing a speaker record
S116 transmitting a speaker record to a server device of the system
B reiterate, restart

## Claims

1. A method (100) of operating a system comprising an electronic device, the electronic device comprising an interface, a processor, and a memory, the method comprising:

   obtaining (S102) one or more audio signals including a first audio signal, wherein the first audio signal is obtained from a call or conversation between a user of the electronic device and a caller, wherein the user is an agent;
   determining (S104A), with the processor and based on a machine learning model, one or more first sentiment metrics indicative of a first speaker state based on the first audio signal, the one or more first sentiment metrics including a first primary sentiment metric indicative of a primary sentiment state of a first speaker, wherein determining (S104A) one or more first sentiment metrics comprises extracting one or more speaker features from the first audio signal, wherein the one or more speaker features comprise paralinguistic features, and wherein the one or more first sentiment metrics are based on the paralinguistic features;

determining (S106A), with the processor and based on a machine learning model, one or more first appearance metrics indicative of an appearance of the first speaker based on the first audio signal, the one or more first appearance metrics including a first primary appearance metric indicative of a primary appearance of the first speaker;

determining (S108A) a first speaker representation based on the first primary sentiment metric and the first primary appearance metric; and

outputting (S110A), via the interface of the electronic device, the first speaker representation.

2. Method (100) according to claim 1, wherein the one or more first sentiment metrics includes a first secondary sentiment metric indicative of a secondary sentiment state of the first speaker.

3. Method (100) according to any of claims 1-2, wherein the one or more first appearance metrics includes a first secondary appearance metric indicative of a secondary appearance of the first speaker.

4. Method (100) according to any of claims 1-3, wherein the first speaker representation is a caller representation, and wherein the first speaker is the caller.

5. Method (100) according to any of claims 1-3, wherein the first speaker representation is an agent representation, and wherein the first speaker is the agent.

6. Method (100) according to any of claims 1-5, wherein determining (S108A) the first speaker representation comprises determining a first primary feature of a first avatar based on the first primary sentiment metric, and wherein the first speaker representation comprises the first avatar.

7. Method (100) according to claim 6, wherein the first primary feature is selected from a mouth feature, an eye feature, a nose feature, a forehead feature, an eyebrow feature, a hair feature, an ear feature, a beard feature, a gender feature, a cheek feature, an accessory feature, a skin feature, a body feature, and a head dimension feature.

8. Method (100) according to any of claims 1-7, wherein determining (S108A) the first speaker representation comprises determining a first secondary feature of the first avatar based on the first primary appearance metric.

9. Method (100) according to claim 8 as dependent on any of claims 6-7, wherein the first secondary feature is different from the first primary feature and is selected from a mouth feature, an eye feature, a nose feature, a forehead feature, an eyebrow feature, a hair feature, an ear feature, a beard feature, a gender feature, a cheek feature, an accessory feature, a skin feature, a body feature, and a head dimension feature.

10. Method (100) according to any of claims 1-9, wherein obtaining (S102) one or more audio signals comprises obtaining a second audio signal; the method (100) comprising

determining (S104B) one or more second sentiment metrics indicative of a second speaker state based on the second audio signal, the one or more second sentiment metrics including a second primary sentiment metric indicative of a primary sentiment state of a second speaker;

obtaining (S106B) one or more second appearance metrics indicative of an appearance of the second speaker, the one or more second appearance metrics including a second primary appearance metric indicative of a primary appearance of the second speaker;

determining (S108B) a second speaker representation based on the second primary sentiment metric and the second appearance metric; and

outputting (S110B), via the interface of the electronic device, the second speaker representation.

11. Method (100) according to any of claims 1-10, wherein the second speaker representation is an agent representation.

12. Method (100) according to any of claims 1-11, the method comprising detecting (S112) a termination of speech, and in accordance with detecting the termination of speech, storing (S114) a speaker record in the memory and/or transmitting a speaker record to a server device of the system, the speaker record comprising a first speaker record indicative of one or more of first appearance metric data and first sentiment metric data of the first speaker.

13. Electronic device (10) comprising a processor (10C), a memory (10A), and an interface (10B), wherein the processor (10C) is configured to:

obtain one or more audio signals including a first audio signal, wherein the first audio signal is obtained from a call or conversation between a user (1A) of the electronic device (10) and a caller (1B), wherein the user (1A) is an agent;

determine, based on a machine learning model, one or more first sentiment metrics indicative of a first speaker state based on the first audio signal, the one or more first sentiment metrics including a first primary sentiment metric indicative of a primary sentiment state of the first speaker wherein to determine one or more first sentiment metrics comprises extracting one or more speaker features from the first audio signal, wherein the one or more speaker features comprise paralinguistic features, and wherein the one or more first sentiment metrics are based on the paralinguistic features; determine, based on a machine learning model, one or more first appearance metrics indicative of an appearance of the first speaker based on the first audio signal, the one or more first appearance metrics including a first primary appearance metric indicative of a primary appearance of the first speaker; determine a first speaker representation based on the first primary sentiment metric and the first primary appearance metric; and output, via the interface (10B), the first speaker representation.

14. System (2) comprising a server device (20) and an electronic device (10), wherein the electronic device (10) is an electronic device according to claim 13.

**Patentansprüche**

1. Ein Verfahren (100) zum Betreiben eines Systems mit einem elektronischen Gerät, wobei das elektronische Gerät eine Schnittstelle, einen Prozessor und einen Speicher umfasst. Das Verfahren umfasst:

   Erfassen (S102) eines oder mehrerer Audiosignale, einschließlich eines ersten Audiosignals, wobei das erste Audiosignal aus einem Anruf oder Gespräch zwischen einem Benutzer des elektronischen Geräts und einem Anrufer stammt, wobei der Benutzer ein Agent ist; Bestimmen (S104A) mit dem Prozessor und basierend auf einem maschinellen Lernmodell einer oder mehrerer erster Stimmungsmetriken, die auf einen ersten Sprecherzustand basierend auf dem ersten Audiosignal hinweisen, wobei die eine oder mehreren ersten Stimmungsmetriken eine erste primäre Stimmungsmetrik umfassen, die auf einen primären Stimmungszustand eines ersten Sprechers hinweist, wobei das Bestimmen (S104A) einer oder mehrerer erster Stimmungsmetriken das Extrahieren eines oder mehrerer Sprechermerkmale aus dem ersten Audiosignal umfasst, wobei die ein oder mehreren Sprechermerkmale paralinguistische Merkmale umfassen und wobei die eine oder mehreren ersten Stimmungsmetriken auf den paralinguistischen Merkmalen basieren;

   Bestimmen (S106A) mit dem Prozessor und basierend auf einem maschinellen Lernmodell eine oder mehrere Metriken für das Auftreten des ersten Sprechers basierend auf dem ersten Audiosignal, wobei die eine oder mehreren Metriken für das Auftreten des ersten Sprechers eine erste Metrik für das primäre Auftreten des ersten Sprechers umfassen; Bestimmen (S108A) einer ersten Sprecherdarstellung basierend auf der ersten Metrik für das primäre Sentiment und der ersten Metrik für das primäre Auftreten; und Ausgeben (S110A) der ersten Sprecherdarstellung über die Schnittstelle des elektronischen Geräts.

2. Verfahren (100) nach Anspruch 1, wobei die eine oder mehreren ersten Sentimentmetriken eine erste sekundäre Sentimentmetrik umfassen, die einen sekundären Sentimentzustand des ersten Sprechers angibt.

3. Verfahren (100) nach einem der Ansprüche 1-2, wobei die eine oder mehreren Metriken für das Auftreten des ersten Sprechers eine erste sekundäre Erscheinungsmetrik umfassen, die einen sekundären Auftritt des ersten Sprechers angibt.

4. Verfahren (100) nach einem der Ansprüche 1-3, wobei die erste Sprecherdarstellung eine Anruferdarstellung ist und der erste Sprecher der Anrufer ist.

5. Verfahren (100) nach einem der Ansprüche 1-3, wobei die erste Sprecherdarstellung eine Agentendarstellung ist und der erste Sprecher der Agent ist.

6. Verfahren (100) nach einem der Ansprüche 1-5, wobei die Bestimmung (S108A) der ersten Sprecherdarstellung die Bestimmung eines ersten primären Merkmals eines ersten Avatars basierend auf der ersten primären Sentimentmetrik umfasst und die erste Sprecherdarstellung den ersten Avatar umfasst.

7. Verfahren (100) nach Anspruch 6, wobei das erste primäre Merkmal ausgewählt wird aus einem Mundmerkmal, einem Augenmerkmal, einem Nasenmerkmal, einem Stirnmerkmal, einem Augenbrauenmerkmal, einem Haarmerkmal, einem Ohrenmerkmal, einem Bartmerkmal, einem Geschlechtsmerkmal, einem Wangenmerkmal, einem Accessoiremerkmal, einem Hautmerkmal, einem Körpermerkmal und einem Kopfmaßmerkmal.

8. Verfahren (100) nach einem der Ansprüche 1-7, wobei die Bestimmung (S108A) der ersten Sprecherdarstellung die Bestimmung eines ersten sekundären Merkmals des ersten Avatars basierend auf der ersten primären Erscheinungsmetrik umfasst.

9. Verfahren (100) nach Anspruch 8 in Abhängigkeit von einem der Ansprüche 6-7, wobei sich das erste sekundäre Merkmal vom ersten primären Merkmal unterscheidet und aus einem Mundmerkmal, einem Augenmerkmal, einem Nasenmerkmal, einem Stirnmerkmal, einem Augenbrauenmerkmal, einem Haarmerkmal, einem Ohrenmerkmal, einem Bartmerkmal, einem Geschlechtsmerkmal, einem Wangenmerkmal, einem Accessoiremerkmal, einem Hautmerkmal, einem Körpermerkmal und einem Kopfmaßmerkmal ausgewählt wird.

10. Verfahren (100) nach einem der Ansprüche 1-9, wobei die Erfassung (S102) eines oder mehrerer Audiosignale die Erfassung eines zweiten Audiosignals umfasst; Das Verfahren (100) umfasst

das Bestimmen (S104B) einer oder mehrerer zweiter Stimmungsmetriken, die auf einen zweiten Sprecherzustand basierend auf dem zweiten Audiosignal schließen lassen, wobei die eine oder mehreren zweiten Stimmungsmetriken eine zweite primäre Stimmungsmetrik enthalten, die auf einen primären Stimmungszustand eines zweiten Sprechers schließen lässt; das Erhalten (S106B) einer oder mehrerer zweiter Erscheinungsmetriken, die auf ein Auftreten des zweiten Sprechers schließen lassen, wobei die eine oder mehreren zweiten Erscheinungsmetriken eine zweite primäre Erscheinungsmetrik enthalten, die auf ein primäres Auftreten des zweiten Sprechers schließen lässt; das Bestimmen (S108B) einer zweiten Sprecherdarstellung basierend auf der zweiten primären Stimmungsmetrik und der zweiten Erscheinungsmetrik; und das Ausgeben (S110B) der zweiten Sprecherdarstellung über die Schnittstelle des elektronischen Geräts.

11. Verfahren (100) nach einem der Ansprüche 1-10, wobei die zweite Sprecherdarstellung eine Agentendarstellung ist.

12. Verfahren (100) nach einem der Ansprüche 1-11, wobei das Verfahren das Erkennen (S112) eines Sprechabbruchs und, entsprechend dem Erkennen des Sprechabbruchs, das Speichern (S114) eines Sprecherdatensatzes im Speicher und/oder die Übertragung eines Sprecherdatensatzes an ein Servergerät des Systems umfasst. Der Sprecherdatensatz umfasst einen ersten Sprecherdatensatz, der einen oder mehrere erste Erscheinungsmetrikdaten und erste Stimmungsmetrikdaten des ersten Sprechers angibt.

13. Elektronisches Gerät (10) mit einem Prozessor (10C), einem Speicher (10A) und einer Schnittstelle (10B), wobei der Prozessor (10C) konfiguriert ist, um:

ein oder mehrere Audiosignale, einschließlich eines ersten Audiosignals, zu empfangen, wobei das erste Audiosignal aus einem Anruf oder Gespräch zwischen einem Benutzer (1A) des elektronischen Geräts (10) und einem Anrufer (1B) stammt, wobei der Benutzer (1A) ein Agent ist;
Bestimmen Sie basierend auf einem maschinellen Lernmodell eine oder mehrere erste Stimmungsmetriken, die auf einen ersten Sprecherzustand basierend auf dem ersten Audiosignal hinweisen. Die eine oder mehreren ersten Stimmungsmetriken umfassen eine erste primäre Stimmungsmetrik, die auf einen primären Stimmungszustand des ersten Sprechers hinweist. Die Bestimmung einer oder mehrerer erster Stimmungsmetriken umfasst das Extrahieren eines oder mehrerer Sprechermerkmale aus dem ersten Audiosignal. Die eine oder mehreren Sprechermerkmale umfassen paralinguistische Merkmale und die eine oder mehreren ersten Stimmungsmetriken basieren auf den paralinguistischen Merkmalen.
Bestimmen Sie basierend auf einem maschinellen Lernmodell eine oder mehrere erste Erscheinungsmetriken, die auf ein Auftreten des ersten Sprechers basierend auf dem ersten Audiosignal hinweisen. Die eine oder mehreren ersten Erscheinungsmetriken umfassen eine erste primäre Erscheinungsmetrik, die auf ein primäres Auftreten des ersten Sprechers hinweist.
Bestimmen Sie eine erste Sprecherdarstellung basierend auf der ersten primären Stimmungsmetrik und der ersten primären Erscheinungsmetrik.
Die erste Sprecherdarstellung wird über die Schnittstelle (10B) ausgegeben.

14. System (2) umfassend ein Servergerät (20) und ein elektronisches Gerät (10), wobei das elektronische Gerät (10) ein elektronisches Gerät gemäß Anspruch 13 ist.

**Revendications**

1. Procédé (100) d'exploitation d'un système comprenant un dispositif électronique, lequel dispositif comprend une interface, un processeur et une mémoire. Le procédé comprend :

l'obtention (S102) d'un ou plusieurs signaux audio, dont un premier signal audio, issu d'un appel ou d'une conversation entre un utilisateur du dispositif électronique et un appelant, l'utilisateur étant un agent ;

la détermination (S104A), à l'aide du processeur et sur la base d'un modèle d'apprentissage automatique, d'une ou plusieurs premières mesures de sentiment, indicatives de l'état du premier locuteur, à partir du premier signal audio. Ces mesures comprennent une première mesure de sentiment primaire, indicative de l'état du premier locuteur. La détermination (S104A) d'une ou plusieurs premières mesures de sentiment consiste à extraire du premier signal audio une ou plusieurs caractéristiques du locuteur, ces caractéristiques comprenant des caractéristiques paralinguistiques, et ces premières mesures de sentiment étant basées sur ces caractéristiques paralinguistiques ; Déterminer (S106A), à l'aide du processeur et sur la base d'un modèle d'apprentissage automatique, une ou plusieurs premières mesures d'apparition indiquant l'apparition du premier locuteur sur la base du premier signal audio, la ou les premières mesures d'apparition comprenant une première mesure d'apparition principale indiquant l'apparition principale du premier locuteur ;

déterminer (S108A) une première représentation du locuteur sur la base de la première mesure de sentiment principale et de la première mesure d'apparition principale ; et

produire (S110A), via l'interface du dispositif électronique, la première représentation du locuteur.

2. Procédé (100) selon la revendication 1, dans lequel la ou les premières mesures de sentiment comprennent une première mesure de sentiment secondaire indiquant l'état de sentiment secondaire du premier locuteur.

3. Procédé (100) selon l'une quelconque des revendications 1 et 2, dans lequel la ou les premières mesures d'apparition comprennent une première mesure d'apparition secondaire indiquant l'apparition secondaire du premier locuteur.

4. Procédé (100) selon l'une quelconque des revendications 1 à 3, dans lequel la première représentation du locuteur est celle de l'appelant, et le premier locuteur est l'appelant.

5. Procédé (100) selon l'une quelconque des revendications 1 à 3, dans lequel la première représentation du locuteur est celle de l'agent, et le premier locuteur est l'agent.

6. Procédé (100) selon l'une quelconque des revendications 1 à 5, dans lequel la détermination (S108A) de la première représentation du locuteur comprend la détermination d'une première caractéristique principale d'un premier avatar sur la base de la première mesure de sentiment principale, et dans lequel la première représentation du locuteur comprend le premier avatar.

7. Procédé (100) selon la revendication 6, dans lequel la première caractéristique principale est choisie parmi : bouche, œil, nez, front, sourcil, cheveux, oreilles, barbe, sexe, joue, accessoire, peau, corps et tour de tête.

8. Procédé (100) selon l'une quelconque des revendications 1 à 7, dans lequel la détermination (S108A) de la première représentation du locuteur comprend la détermination d'une première caractéristique secondaire du premier avatar sur la base de la première mesure d'apparence primaire.

9. Procédé (100) selon la revendication 8, telle que dépendante de l'une quelconque des revendications 6 à 7, dans lequel la première caractéristique secondaire est différente de la première caractéristique primaire et est sélectionnée parmi : une caractéristique de la bouche, une caractéristique de l'œil, une caractéristique du nez, une caractéristique du front, une caractéristique des sourcils, une caractéristique des cheveux, une caractéristique des oreilles, une caractéristique de la barbe, une caractéristique du sexe, une caractéristique des joues, une caractéristique d'un accessoire, une caractéristique de la peau, une caractéristique du corps et une caractéristique des dimensions de la tête.

10. Procédé (100) selon l'une quelconque des revendications 1 à 9, dans lequel l'obtention (S102) d'un ou plusieurs signaux audio comprend l'obtention d'un second signal audio ; Le procédé (100) comprend les étapes suivantes :

déterminer (S104B) une ou plusieurs secondes mesures de sentiment, indicatives de l'état du second locuteur, sur la base du second signal audio, la ou les secondes mesures de sentiment comprenant une seconde mesure de sentiment principale, indicative de l'état de sentiment principal du second locuteur ;

obtenir (S106B) une ou plusieurs secondes mesures d'apparence, indicatives de l'apparence du second locuteur, la ou les secondes mesures d'apparence comprenant une seconde mesure d'apparence principale, indicative de l'apparence principale du second locuteur ;

déterminer (S108B) une représentation du second locuteur sur la base de la seconde mesure

EP 4 006 900 B1

60

de sentiment principale et de la seconde mesure d'apparence ; et
produire (S110B), via l'interface du dispositif électronique, la représentation du second locuteur.

11. Procédé (100) selon l'une quelconque des revendications 1 à 10, dans lequel la représentation du second locuteur est une représentation d'agent.

12. Procédé (100) selon l'une quelconque des revendications 1 à 11, comprenant la détection (S112) d'une interruption de parole et, en fonction de cette détection, le stockage (S114) d'un enregistrement du locuteur en mémoire et/ou sa transmission à un serveur du système. Cet enregistrement comprend un premier enregistrement indiquant une ou plusieurs données de première métrique d'apparence et de première métrique de sentiment du premier locuteur.

13. Dispositif électronique (10) comprenant un processeur (10C), une mémoire (10A) et une interface (10B), le processeur (10C) étant configuré pour :

obtenir un ou plusieurs signaux audio, dont un premier signal audio, provenant d'un appel ou d'une conversation entre un utilisateur (1A) du dispositif électronique (10) et un appelant (1B), l'utilisateur (1A) étant un agent ; Déterminer, à partir d'un modèle d'apprentissage automatique, une ou plusieurs premières mesures de sentiment, indicatives de l'état du premier locuteur, à partir du premier signal audio. Ces mesures comprennent une première mesure de sentiment primaire, indicative de l'état du premier locuteur. La détermination de ces mesures comprend l'extraction d'une ou plusieurs caractéristiques du locuteur à partir du premier signal audio. Ces caractéristiques comprennent des caractéristiques paralinguistiques, et ces mesures sont basées sur ces caractéristiques paralinguistiques.
Déterminer, à partir d'un modèle d'apprentissage automatique, une ou plusieurs premières mesures d'apparence, indicatives de l'apparence du premier locuteur, à partir du premier signal audio. Ces mesures comprennent une première mesure d'apparence primaire, indicative de l'apparence principale du premier locuteur.
Déterminer une première représentation du locuteur à partir de la première mesure de sentiment primaire et de la première mesure d'apparence primaire.
Sortir, via l'interface (10B), la première représentation du locuteur.

14. Système (2) comprenant un dispositif serveur (20) et un dispositif électronique (10), le dispositif électronique (10) étant un dispositif électronique selon la revendication 13.

**Fig. 1**

B ──────────────────────────┐                         100

┌──────────────────────────────────────────────────────┐
│              S102 Obtaining audio signal(s) (AS)        │
│                                                        │
│                   AS_1, AS_2, …                        │
└──────────────────────────────────────────────────────┘
                            │
                            ▼
┌──────────────────────────────────────────────────────┐
│          S104 Determining sentiment metrics (SM)       │
│  ┌──────────────────┐  ┌──────────────────┐           │
│  │ S104A            │  │ S104B            │           │
│  │  ┌────────────┐  │  │  ┌────────────┐  │           │
│  │  │  SM_1_1    │  │  │  │  SM_2_1    │  │           │
│  │  └────────────┘  │  │  └────────────┘  │           │
│  │  ┌────────────┐  │  │  ┌────────────┐  │           │
│  │  │  SM_1_2    │  │  │  │  SM_2_2    │  │           │
│  │  └────────────┘  │  │  └────────────┘  │           │
│  │        ⋮         │  │        ⋮         │           │
│  │  ┌────────────┐  │  │  ┌────────────┐  │           │
│  │  │  SM_1_M    │  │  │  │  SM_2_A    │  │           │
│  │  └────────────┘  │  │  └────────────┘  │           │
│  └──────────────────┘  └──────────────────┘           │
└──────────────────────────────────────────────────────┘
                            │
                            ▼
┌──────────────────────────────────────────────────────┐
│         S106 Determining appearence metrics (AM)       │
│  ┌──────────────────┐  ┌──────────────────┐           │
│  │ S106A            │  │ S106B            │           │
│  │  ┌────────────┐  │  │  ┌────────────┐  │           │
│  │  │  AM_1_1    │  │  │  │  AM_2_1    │  │           │
│  │  └────────────┘  │  │  └────────────┘  │           │
│  │  ┌────────────┐  │  │  ┌────────────┐  │           │
│  │  │  AM_1_2    │  │  │  │  AM_2_2    │  │           │
│  │  └────────────┘  │  │  └────────────┘  │           │
│  │        ⋮         │  │        ⋮         │           │
│  │  ┌────────────┐  │  │  ┌────────────┐  │           │
│  │  │  AM_1_Q    │  │  │  │  AM_2_D    │  │           │
│  │  └────────────┘  │  │  └────────────┘  │           │
│  └──────────────────┘  └──────────────────┘           │
└──────────────────────────────────────────────────────┘
                            │
                            ▼
┌──────────────────────────────────────────────────────┐
│        S108 Determining speaker representation (SR)    │
│  ┌────────────────────┐  ┌────────────────────┐       │
│  │ S108A (SR_1)       │  │ S108B (SR_2)       │       │
│  │ ┌──────┬────────┐  │  │ ┌──────┬────────┐  │       │
│  │ │S108AA│ F_1_1  │  │  │ │S108BA│ F_2_1  │  │       │
│  │ │      └────────┘  │  │ │      └────────┘  │       │
│  │ │      ┌────────┐  │  │ │      ┌────────┐  │       │
│  │ │      │ F_1_2  │  │  │ │      │ F_2_2  │  │       │
│  │ │      └────────┘  │  │ │      └────────┘  │       │
│  │ │        ⋮         │  │ │        ⋮         │       │
│  │ │      ┌────────┐  │  │ │      ┌────────┐  │       │
│  │ │      │ F_1_K  │  │  │ │      │ F_2_J  │  │       │
│  │ └──────┴────────┘  │  │ └──────┴────────┘  │       │
│  └────────────────────┘  └────────────────────┘       │
└──────────────────────────────────────────────────────┘
                            │
                            ▼
                           (A)

# Fig. 2A

A

S110 Outputting speaker representation

S110A (SR_1)

S110AA | SR_1_1

SR_1_2

.
.

SR_1_T

S110B (SR_2)

S110BA | SR_2_1

SR_2_2

.
.

SR_2_U

S112 Detecting termination of speech

No

B

Yes

S114 Storing a speaker record

S116 Transmitting speaker record to server device

**Fig. 2B**

**Fig. 3**

**Fig. 4**

**Fig. 5**

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018144761 A1
- US 2012130717 A1